# EUROPEAN PATENT SPECIFICATION

(11) **EP 2 768 160 B1**
(45) Date of publication and mention of the grant of the patent: **27.11.2019**
(21) Application number: 12840215.3
(22) Date of filing: 29.06.2012
(51) Int. Cl.: H04B 10/07, H04J 14/02, H04Q 11/00

(54) **METHOD AND APPARATUS FOR PROCESSING UPLINK DATA ABNORMITY**
VERFAHREN UND VORRICHTUNG ZUR VERARBEITUNG VON UPLINK-DATENANOMALIEN
PROCÉDÉ ET APPAREIL DE TRAITEMENT D'ANOMALIES DE DONNÉES EN LIAISON MONTANTE

(30) Priority: 12.10.2011 CN 201110308578
(43) Date of publication of application: 20.08.2014
(73) Proprietor: ZTE Corporation, Shenzhen, Guangdong 518057 (CN)
(72) Inventor: GENG, Dan, Shenzhen Guangdong 518057 (CN); ZHANG, Weiliang, Shenzhen Guangdong 518057 (CN); ZHANG, Dezhi, Shenzhen Guangdong 518057 (CN); ZHU, Songlin, Shenzhen Guangdong 518057 (CN); GUO, Yong, Shenzhen Guangdong 518057 (CN); HE, Zian, Shenzhen Guangdong 518057 (CN); HUANG, Xingang, Shenzhen Guangdong 518057 (CN); YUAN, Liquan, Shenzhen Guangdong 518057 (CN)
(74) Representative: Carangelo, Pierluigi
(86) International application number: PCT/CN2012/077974
(87) International publication number: WO 2013/053248

(56) References cited:
- EP-A2- 1 802 007
- CN-A- 1 996 809
- CN-A- 1 996 809
- CN-A- 101 651 492
- CN-A- 101 651 492
- US-A1- 2008 304 828
- US-A1- 2010 106 437
- "Rogue optical network unit (ONU) considerations; G.Sup49 (02/11)", ITU-T STANDARD, INTERNATIONAL TELECOMMUNICATION UNION, GENEVA ; CH, no. G.Sup49 (02/11), 25 February 2011 (2011-02-25), pages 1-16, XP017467827, [retrieved on 2011-07-25]

## Description

### Technical Field

The present invention relates to the field of communications, and in particular, to a method and apparatus for processing upstream data abnormity.

### Background

With the development of network technologies, networks can be used to transmit a large amount of services such as voice, data, video, and therefore, the requirements on bandwidth increase continuously, and the passive optical network (PON) appears under such requirements.

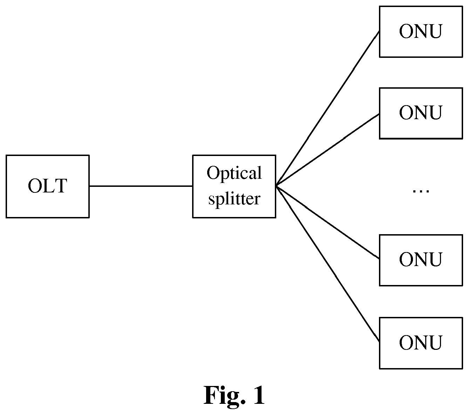

Fig. 1 is a diagram showing the topology structure of a PON system according to related art. As shown in Fig. 1, the PON system usually consists of an office-side optical line terminal (OLT), user-side optical network units (ONUs) and an optical distribution network (ODN), and usually adopts a point-to-multipoint network structure. The ODN consists of single mode fiber and passive optical devices such as an optical splitter and an optical connector, and provides optical transmission medium for the physical connection between the OLT and the ONU. Currently, the PON technologies mainly include the time division multiplexing (TDM) PON system, the wavelength division multiplexing (WDM) PON system and the orthogonal frequency division multiplexing (OFDM) system.

In the TDM PON system, for example, in a Gigabit-capable passive optical network (GPON) system, an Ethernet passive optical network (EPON) system, a 10-Gigabit-capable passive optical network (XG-PON) system and a 10-Gigabit-capable EPON system, the data transmission in the downstream direction (i.e., from OLT to ONU) employs broadcast, and each ONU respectively receives all the frames and then obtains its own frames according to ONU-ID, GEM-Port ID, and Allocation-ID. For data transmission in the upstream direction (i.e., from ONU to OLT), since respective ONUs need to share the transmission medium, each ONU should transmit upstream data in the time slot allocated thereto by the OLT.

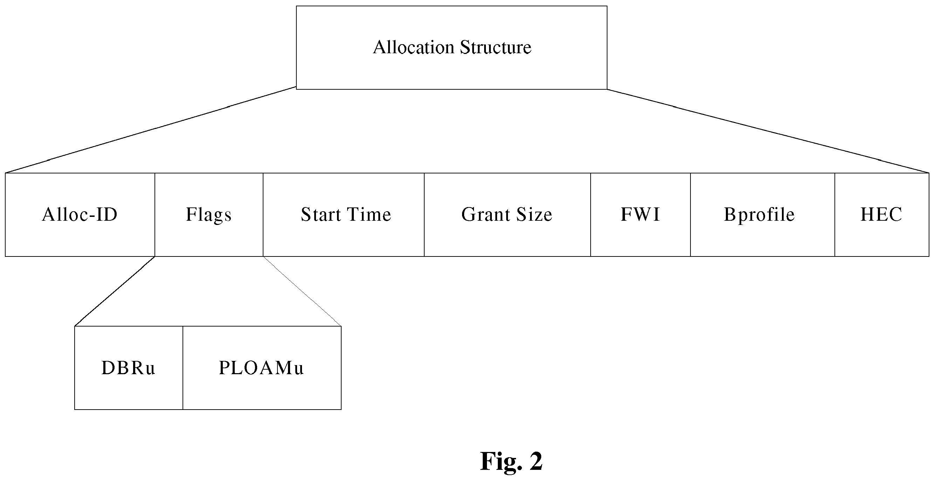

Taking XG-PON for example, the time slot allocated to the ONU by the OLT for transmitting upstream data is transmitted to the ONU via an Allocation structure in a downlink frame. Fig. 2 is a diagram showing the Allocation structure in XG-PON according to related art. As shown in Fig. 2, the Allocation structure consists of an Alloc-ID domain (Allocation Identifier, which is a bandwidth allocation identifier and is usually a transmission container (T-CONT) identifier), a Flags domain (a bandwidth allocation option, which occupies 2 bits, one bit for indicating whether the ONU sends an uplink dynamic bandwidth report (DBRu), and the other bit for indicating whether the ONU sends an uplink physical layer operation administration and maintenance (PLOAMu) message), a start time (which instructs the location of the first byte of the XG-PON transmission convergence burst (XGTC burst) sent by the ONU in a 125 us uplink frame), a grant size, a forced waking up indication (FWI), a burst overhead parameter (Bprofile) and hybrid error correct (HEC).

When an ONU receives an Allocation structure, if the ONU determines that this Allocation structure is allocated to itself according to the Alloc-ID, then the ONU performs HEC check on the data in the Allocation structure, and if the check result is that the data is correct, then the ONU starts to send the data in the T-CONT, the bandwidth allocation identifier of which is Alloc-ID, from the StartTime indicated by the Allocation structure, and the length of the sent data is the length indicated in the Grant size domain. Wavelength division multiplexing passive optical network (WDM-PON) and orthogonal frequency division multiplexing passive optical network (OFDM-PON) technologies are two important technology branches in the PON family, and similar to other PON technologies, WDM-PON and OFDM-PON are passive optical access technologies which adopt a point-to-multipoint topology over an optical link.

In a WDM-PON system, there are a plurality of optical transmitters with different wavelengths at the OLT, the optical wavelength of each optical transmitter being respectively λd 1, λd 2, ..., λd n, where λd 1 is the wavelength adopted by the OLT for sending downstream data when communicating with a first ONU, and λd 2 is the wavelength of the OLT for sending downstream data when communicating with a second ONU, ..., and λd n is the wavelength of the OLT for sending downstream data when communicating with an nth ONU. The emission wavelength of the transmitter at each ONU is different from those of the transmitters at other ONUs, for example, the transmission wavelength of the transmitter of the first ONU for sending upstream data to the OLT is λu1, the transmission wavelength of the transmitter of the second ONU for sending upstream data to the OLT is λu2, ..., the transmission wavelength of the transmitter of the nth ONU for sending upstream data to the OLT is λun. By employing the above technology, the OLT can send downstream data to all ONUs simultaneously, and respective ONUs can also send upstream data simultaneously, that is, the OLT and the ONUs adopt a point-to-point structure over the optical channel.

In an OFDM-PON system, there are a plurality of different subcarriers at the OLT, wherein each subcarrier is respectively C1, C2, ...., Cn, and respective subcarriers are orthogonal to each other; the OLT modulates the downstream data intended for the first ONU to a first subcarrier (or modulating same to the first subcarrier and other subcarriers), the OLT modulates the downstream data intended for the second ONU to a second subcarrier (or modulating same to the second subcarrier and other subcarriers), ..., the OLT modulates the downstream data intended for the nth ONU to an nth subcarrier (or modulating same to the nth subcarrier and other subcarriers), and there is no intersection between the subcarriers adopted for sending the downstream data to different ONUs, that is, different ONUs use different subcarriers. The subcarrier for sending upstream data to the OLT at the ONU is the same as the subcarrier adopted by the OLT for sending downstream data to the current ONU. By employing the above technology, an OLT can send downstream data to all ONUs simultaneously, and respective ONUs can also send upstream data simultaneously, that is, the OLT and the ONUs employ a point-to-point structure over the optical channel.

In a PON system, the upstream time slot, wavelength or subcarrier adopted by each ONU for transmitting upstream data is different. For a WDM-PON and OFDM-PON system, since the wavelength or subcarrier adopted by each ONU for transmitting upstream data is different, each ONU is different, that is, the ONU is colourful, as a result, the operators need to reserve various models of ONUs, and when a certain user needs to change the ONU, the operator also needs to confirm the model of this ONU of the user, thereby improving the operation and maintenance costs of the ONU.

In order to solve the above problem, the emission wavelength of the ONU in WDM-PON in related art is tunable, and the ONU in OFDM-PON can also adopt different subcarriers to send upstream data, and in both cases, the ONU selects its own emission wavelength or subcarrier under the command of the OLT. Since the ONU can tune its own emission wavelength or select the subcarrier to be adopted, if there is a malicious ONU in the network which adopts the time slot, wavelength or subcarrier of another ONU in the network to send upstream data, or the emission wavelength of a certain ONU shifts to that of another ONU, the OLT will not be able to correctly parse the upstream data of said another ONU. For TDM-PON, if a certain ONU sends upstream data in the time slot allocated to another ONU by the OLT, the OLT will also not be able to correctly parse the upstream data of said another ONU. It can be seen that there are many situations which cause the upstream data of the ONU to be abnormal in related art, which will affect the transmission of normal services of the ONU and reduce the quality of service of the network.

The related document (Rogue optical network unit (ONU) considerations; G. Sup49 (02/11)) discloses that supplement 49 to ITU-T G-series Recommendations provides additional guidelines relative to ITU-T G.984.x-series and ITU-T G.987.x-series Recommendations, and other passive optical networks (PONs). the related document (EP 1802007A2) discloses that the OLT determines whether the continuous seizure time of an upstream channel exceeds the preset threshold, and if so, detects the failed ONU that continuously seizes the upstream channel and use a control message or control signal to instruct the failed ONU to turn off power supply to its transmitting circuit; the related document (CN 101651492A) provides a remote transmission device, system and abnormal luminescence processing method of optical access network. In CN 1996809A an OLT shuts down all ONUs one after another or commands a change of wavelength in all ONUs However, the above mentioned problem still remains unsolved by the above mentioned documents.

### Summary

In view of the problem that the upstream data of an ONU being abnormal will affect the transmission of normal services of the ONU and thus the quality of service of the network is reduced, the present invention provides a method and apparatus for processing upstream data abnormity, so as to solve the above problem.

According to one aspect of the present invention, a method for processing upstream data abnormity is provided.

The method for processing upstream data abnormity includes: an optical line terminal (OLT) detecting that upstream data is abnormal; the OLT instructing one or more optical network units (ONUs) to stop transmitting the upstream data and/or instructing one or more ONUs to change a physical channel.

Preferably, the OLT detects that upstream data is abnormal in a situation that: in a case where the OLT has allocated a first physical channel for a first ONU, the OLT receives, in the first physical channel, upstream data not sent by the first ONU.

Preferably, the OLT instructing one or more ONUs to stop transmitting the upstream data and/or instructing one or more ONUs to change a physical channel includes: the OLT instructing the first ONU and/or one or more ONUs sending upstream data to stop transmitting the upstream data.

Preferably, after the OLT instructs one or more ONUs to stop transmitting the upstream data and/or instructs one or more ONUs to change a physical channel, the method further includes: the OLT instructing the first ONU to resume transmitting the upstream data.

Preferably, the OLT detects that upstream data is abnormal in a situation that: in a case where the OLT has allocated a first physical channel for a first ONU, the OLT is not able to parse all the upstream data sent by the first ONU.

Preferably, the OLT detects that upstream data is abnormal in a situation that: in a case where the OLT has allocated a first physical channel for a first ONU, the OLT is not able to parse all the upstream data sent by the first ONU, and still receives upstream data in the first physical channel after having instructed the first ONU to stop transmitting the upstream data.

Preferably, the OLT detects that upstream data is abnormal in a situation that: in a case where the OLT has allocated a first physical channel for a first ONU, the OLT is not able to parse all the upstream data sent by the first ONU and an optical power value of the upstream data received by the OLT in the first physical channel increases or the optical power value of the upstream data received by the OLT in the first physical channel changes suddenly.

Preferably, the OLT detects that upstream data is abnormal in a situation that: in a case where the OLT has allocated a first physical channel for a first ONU and allocated a second physical channel for a second ONU, the OLT does not receive the upstream data from the first ONU and the OLT is not able to parse all the upstream data sent by the second ONU.

Preferably, the OLT detects that upstream data is abnormal in a situation that: in a case where the OLT has allocated a first physical channel for a first ONU, the OLT does not receive the upstream data from the first ONU in the first physical channel and the OLT receives upstream data in an unallocated second physical channel.

Preferably, the OLT detects that upstream data is abnormal in a situation that: in a case where the OLT has allocated a first physical channel for a first ONU, the OLT detects that a shift exists in the first physical channel of the first ONU.

Preferably, before the OLT instructs the one or more ONUs to change a physical channel, the method further includes: the OLT obtaining information of another OLT or other OLTs for accommodating the one or more ONUs; and the OLT switching the one or more ONUs to said another OLT or said other OLTs according to the information.

Preferably, the OLT switching the one or more ONUs to said another OLT or said other OLTs according to the information includes: in a case where the information contains a downstream wavelength value for sending downstream data and an upstream wavelength value for receiving upstream data of said another OLT or said other OLTs, the OLT commanding the one or more ONUs to adjust one or more downstream wavelengths of the one or more ONUs to the downstream wavelength value and commanding the one or more ONUs to adjust one or more upstream wavelength of the one or more ONUs to the upstream wavelength value.

Preferably, after the OLT instructs the one or more ONUs to change a physical channel, the method further includes: the OLT detecting that upstream data is normal; and the OLT notifying said another OLT or said other OLTs to switch the one or more ONUs back to the OLT.

Preferably, after the OLT instructs one or more ONUs to stop transmitting the upstream data and/or instructs one or more ONUs to change a physical channel, the method further includes: determining an abnormal ONU in the one or more ONUs which causes the upstream data to be abnormal.

Preferably, after determining an abnormal ONU in the one or more ONUs which causes the upstream data to be abnormal, the method further includes: recording the abnormal ONU; and blocking the abnormal ONU from entering a working state.

Preferably, the OLT instructing one or more ONUs to stop transmitting the upstream data and/or instructing one or more ONUs to change a physical channel includes: the OLT sending an indication of stopping transmitting the upstream data and/or an indication of changing the physical channel by carrying the indication in a management channel.

Preferably, the OLT instructing one or more ONUs to stop transmitting the upstream data and/or instructing one or more ONUs to change a physical channel includes: the OLT completely or partially encrypts the indication of stopping transmitting the upstream data and/or the indication of changing the physical channel.

Preferably, the physical channel includes one of following: wavelength, subcarrier, subcarrier group and time slot.

According to another aspect of the present invention, an apparatus for processing upstream data abnormity is provided, which can be applied to an OLT.

The apparatus for processing upstream data abnormity includes: a detection module configured to detect that upstream data is abnormal; and an indication module configured to instruct one or more ONUs to stop transmitting the upstream data and/or instruct one or more ONUs to change a physical channel.

The present invention provides a measure of stopping ONUs from transmitting upstream data and/or changing the physical channels of ONUs, thereby being able to avoid the impact on normal service transmission of ONUs, and ensure the quality of the network service.

### Brief Description of the Drawings

Drawings, provided for further understanding of the present invention and forming a part of the specification, are used to explain the present invention together with embodiments of the present invention rather than to limit the present invention. In the drawings:
Fig. 1 is a diagram showing the topology structure of a PON system according to related art;
Fig. 2 is a diagram showing the Allocation structure of XG-PON according to related art;
Fig. 3 is a flowchart of a method for processing upstream data abnormity according to an embodiment of the present invention;
Fig. 4a is a topology structure diagram I of a hybrid PON system according to embodiment X of the present invention;
Fig. 4b is a topology structure diagram II of a hybrid PON system according to embodiment X of the present invention;
Fig. 5 is a topology structure diagram I of a hybrid PON system according to another embodiment of the present invention; and
Fig. 6 is a structural block diagram of an apparatus for processing upstream data abnormity according to an embodiment of the present invention.

### Detailed Description of the Embodiments

Note that, the embodiments of the present invention and the features of the embodiments can be combined with each other if there is no conflict. The disclosure will be explained below with reference to the drawings and in conjunction with the embodiments in detail.

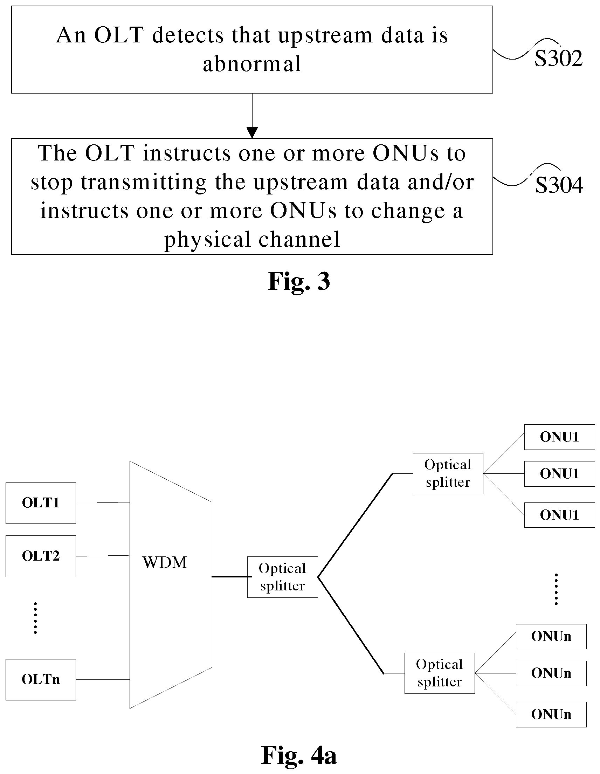

An embodiment of the present invention provides a method for processing upstream data abnormity. Fig. 3 is a flowchart of a method for processing upstream data abnormity according to an embodiment of the present invention, including the following step S302 to step S304.

Step S302, an OLT detects that upstream data is abnormal.

Step S304, the OLT instructs one or more ONUs to stop transmitting the upstream data and/or instructs one or more ONUs to change a physical channel.

It can be seen that there are many situations which cause the upstream data of the ONU to be abnormal in related art, which will affect the transmission of normal services of the ONU and reduce the quality of service of the network. The embodiment of the present invention provides a measure of stopping ONUs from transmitting upstream data and/or changing the physical channel of ONUs, thereby being able to avoid the impact on normal service transmission of ONUs, and ensure the quality of the network service.

Specifically, the embodiments of the present invention provide an upstream data abnormity situation and a solution thereof, that is, if, in the case where the OLT has allocated a first physical channel for a first ONU, the OLT receives in the first physical channel the upstream data not sent by the first ONU, then the OLT instructs the first ONU and/or one or more ONUs sending upstream data to stop transmitting upstream data. Then, the OLT can also instruct the first ONU to resume transmitting upstream data.

Specifically, the OLT detects that upstream data is normal in the following 6 situations.

Situation I: in the case where the OLT has allocated a first physical channel for a first ONU, the OLT cannot parse all the upstream data sent by the first ONU.

Situation II: in the case where the OLT has allocated a first physical channel for a first ONU, the OLT cannot parse all the upstream data sent by the first ONU and still receives upstream data in the first physical channel after having instructed the first ONU to stop transmitting the upstream data.

Situation III: in the case where the OLT has allocated a first physical channel for a first ONU, the OLT cannot parse all the upstream data sent by the first ONU and the optical power value of the upstream data received by the OLT in the first physical channel increases or the optical power value of the upstream data received by the OLT in the first physical channel changes suddenly (jumps).

Situation IV: in the case where the OLT has allocated a first physical channel for a first ONU and allocated a second physical channel for a second ONU, the OLT does not receive the upstream data from the first ONU and the OLT cannot parse all the upstream data sent by the second ONU.

Situation V: in the case where the OLT has allocated a first physical channel for a first ONU, the OLT does not receive the upstream data from the first ONU in the first physical channel and the OLT receives upstream data in an unallocated second physical channel.

Situation VI: in the case where the OLT has allocated a first physical channel for a first ONU, the OLT detects that shift exists in the first physical channel of the first ONU.

Preferably, before the OLT instructs the one or more ONUs to change a physical channel, the OLT obtains information of another OLT or other OLTs for accommodating the one or more ONUs; and the OLT switches the one or more ONUs to said another OLT or said other OLTs according to the information. In particular, the OLT switches the one or more ONUs to said another OLT or said other OLTs according to the information includes: in the case where the information contains a downstream wavelength value for sending downstream data and an upstream wavelength value for receiving upstream data of said another OLT or said other OLTs, the OLT commands the one or more ONUs to adjust the downstream wavelength(s) thereof to the downstream wavelength value and commands the one or more ONUs to adjust the upstream wavelength(s) thereof to the upstream wavelength value.

Preferably, after the OLT instructs the one or more ONUs to change a physical channel, if the OLT detects that upstream data is normal, the OLT notifies said another OLT or said other OLTs to switch the one or more ONUs back to the OLT.

Preferably, after the OLT instructs one or more ONUs to stop transmitting the upstream data and/or instructs one or more ONUs to change a physical channel, an abnormal ONU in the one or more ONUs which causes the upstream data to be abnormal is determined.

Preferably, after determining an abnormal ONU in the one or more ONUs which causes the upstream data to be abnormal, the abnormal ONU is recorded; and the abnormal ONU is blocked from entering a working state.

Preferably, the OLT instructing one or more ONUs to stop transmitting the upstream data and/or instructing one or more ONUs to change a physical channel includes: the OLT sends the indication of stopping transmitting the upstream data and/or the indication of changing the physical channel by carrying same in a management channel.

Preferably, the OLT instructing one or more ONUs to stop transmitting the upstream data and/or instructing one or more ONUs to change a physical channel includes: the OLT completely or partially encrypts the indication of stopping transmitting the upstream data and/or the indication of changing the physical channel.

Preferably, the above physical channel includes one of following: wavelength, subcarrier, subcarrier group and time slot.

The implementation of the embodiments of the present invention is described in details with reference to the embodiments below.

### Embodiment I (WDM system, wavelength change by command)

An OLT allocates one downstream wavelength for receiving a downstream signal and one upstream wavelength for sending upstream data for each ONU connected into the PON system. After the ONU receives the above information sent by the OLT, the ONU adjusts the emission wavelength of its own laser to the above upstream wavelength and adjusts the receiving wavelength of its own receiver to the above downstream wavelength. The upstream wavelengths allocated to respective ONUs by the OLT are different from each other.

When the OLT finds that the upstream data is abnormal, the OLT and the ONU adopt the following steps to restore upstream communication.

Step 1: the OLT sends to the ONU corresponding to the mth wavelength a physical layer operations, administration and maintenance (PLOAM) message shown in Table 1 under one of the following situation: the ONU corresponding to the nth wavelength does not send any upstream data but the OLT detects that an ONU which carries the identity information (such as ONU identification information, ONU serial number, ONU logic link identifier or ONU media access control address information) of the ONU corresponding to the mth wavelength adopts the nth wavelength to send upstream data; or, the OLT does not receive the upstream data sent by the ONU corresponding to the mth wavelength and the OLT cannot normally parse the upstream data sent by the ONU corresponding to the nth wavelength; or, the OLT does not receive the upstream data sent by the ONU corresponding to the mth wavelength and the OLT receives the upstream data sent by an ONU which carries the identity information of the ONU corresponding to the mth wavelength over an unallocated wavelength; or, the ONU cannot normally parse the upstream data sent by the ONU corresponding to the nth wavelength, and after the OLT commands the ONU corresponding to the nth wavelength to stop sending upstream data, the OLT still receives the upstream data over the nth wavelength; or, the OLT cannot normally parse the upstream data sent by the ONU corresponding to the nth wavelength and the optical power value at the nth wavelength received by the OLT increases or the optical power value jumps (sudden change in the optical power). As shown in Table 1, the first and second bytes of the Assign_ONU_Wavelength message hold the value of the ONU-ID, which indicates that this message is intended for an ONU the ONU-ID value of which is ONU-ID 1; the content of the third byte indicates that the type of this PLOAM message is the structure information type of the Assign_ONU_Wavelength message; the fourth byte holds the serial number of the PLOAM message; and the contents of the fifth to the fortieth bytes are the upstream wavelength value allocated by the OLT to the ONU (in other embodiments, the contents of the fifth to the fortieth bytes are the upstream wavelength value and the downstream wavelength value allocated to the ONU by the OLT), and the forty-oneth to the forty-eighth bytes hold a message verification code for message integrity check. The OLT commands, via the Assign_ONU_Wavelength message, the mth ONU to adjust the emission wavelength of its own laser to the upstream wavelength allocated to the ONU by the OLT (in other embodiments, the OLT commands, via the Assign_ONU_Wavelength message, the mth ONU to adjust the emission wavelength of its own laser to the upstream wavelength allocated to the ONU by the OLT and adjust the receiving wavelength of its own receiver to the downstream wavelength allocated to the ONU by the OLT).

Step 2: after receiving the Assign_ONU_Wavelength message sent by the OLT, the ONU corresponding to the mth wavelength adjusts the emission wavelength of its own laser to the upstream wavelength allocated by the OLT in the Assign_ONU_Wavelength message (in other embodiments, after receiving the Assign_ONU_Wavelength message sent by the OLT, the ONU adjusts the emission wavelength of its own laser to the upstream wavelength allocated by the OLT in the Assign_ONU_Wavelength message and adjusts the receiving wavelength of its own receiver to the downstream wavelength allocated to the ONU by the OLT).

**Table 1 Structure diagram of Assign_ONU_Wavelength message**

| Assign_ONU_Wavelength message | | |
|---|---|---|
| Byte | Content | Description |
| 1-2 | ONU-ID1 | The content of these bytes is ONU-ID1, which indicates that this message is intended for the ONU the ONU-ID value of which is ONU-ID1. |
| 3 | xxxxxxxx | The message type is defining "Assign_UP BWmap" |
| 4 | SeqNo | The serial number of the PLOAM message |
| 5-40 | Data | The content of the data domain (Data) is the upstream wavelength allocated to the ONU by the OLT |
| 41-48 | MIC | Message integrity check |

The OLT detects whether the ONU corresponding to the mth wavelength has completed the adjustment of the upstream wavelength (in other embodiments, the OLT may also check whether the ONU corresponding to the mth wavelength completes the adjustment of the upstream wavelength and the downstream wavelength), and if the ONU has completed the adjustment of the wavelength, the OLT detects whether the upstream data goes back to normal, and if the upstream data goes back to normal, the OLT and the ONU establish normal communication. If the OLT does not receive the upstream data sent by the ONU corresponding to the mth wavelength by employing the mth wavelength and receives the upstream data sent by the ONU corresponding to the mth wavelength by employing other wavelengths, then the OLT determines that the ONU corresponding to the mth wavelength is an abnormal ONU. The OLT processes the found abnormal ONU (the processing may be that the OLT employs a unicast or multicast message to command the abnormal ONU to shut down its laser or command the abnormal ONU to change the emission wavelength and/or downstream wavelength of its laser. or the OLT disconnects the branch fiber connecting the abnormal ONU).

In this embodiment, the upstream wavelength may be the same as the downstream wavelength and may also be different from the downstream wavelength.

### Embodiment II

If the OLT cannot correctly parse the upstream data sent by the ONU corresponding to the nth wavelength, the OLT and the ONU adopt some or all of the following main steps or some contents in all the steps to restore upstream communication.

Step 1: after the OLT commands the nth ONU to stop sending upstream data, if the upstream data goes back to normal, then the OLT determines that this ONU is an abnormal ONU, and then step 5 is executed; if the OLT continues receiving the upstream data corresponding to the nth wavelength and the upstream data carries identity information of an ONU, the OLT determines that the ONU which carries this identity information is an abnormal ONU. If the identity information of this ONU is not that of the ONU corresponding to the nth wavelength, then the OLT commands the ONU corresponding to the nth wavelength to restore upstream data transmission, and then step 5 is executed. If the OLT continues receiving upstream data corresponding to the nth wavelength, and the upstream data cannot be parsed normally, then step 2 is executed.

Step 2: the OLT commands, via the Assign_ONU_Wavelength message, the ONU corresponding to the nth wavelength to adjust the emission wavelength of its own laser to the upstream wavelength allocated to the ONU by the OLT (in other embodiments, the OLT commands, via the Assign_ONU_Wavelength message, the ONU corresponding to the nth wavelength to adjust the emission wavelength of its own laser to the upstream wavelength allocated to the ONU by the OLT and adjusts the receiving wavelength of its own receiver to the downstream wavelength allocated to the ONU by the OLT).

Step 3: after receiving the Assign_ONU_Wavelength message sent by the OLT, the ONU adjusts the emission wavelength of its own laser to the upstream wavelength allocated by the OLT in the Assign_ONU_Wavelength message (in other embodiments, after receiving the Assign_ONU_Wavelength message sent by the OLT, the ONU adjusts the emission wavelength of its own laser to the upstream wavelength allocated by the OLT in the Assign_ONU_Wavelength message and adjusts the receiving wavelength of its own receiver to the downstream wavelength allocated to the ONU by the OLT).

Step 4: the OLT detects whether the ONU adopts the newly allocated wavelength to send upstream data. If the OLT does not receive the upstream data sent by the ONU adopting the newly allocated wavelength and the OLT still receives the upstream data sent by adopting the nth wavelength, then the OLT determines that the ONU is an abnormal ONU and then step 5 is executed. If the OLT receives the upstream data sent by the ONU adopting the newly allocated wavelength and the OLT still receives the upstream data sent by adopting the nth wavelength, then the OLT and the ONU adopting the new wavelength have restored upstream communication, and if the identity information of the ONU is carried in the upstream data sent by adopting the nth wavelength, then the OLT determines that the ONU which carries this identity information is an abnormal ONU, and then step 5 is executed; and if the OLT still cannot normally parse the upstream data sent by adopting the nth wavelength, then the OLT determines that those ONUs the upstream data of which is not received and those ONUs the upstream data sent by which cannot be parsed by the OLT normally are abnormal ONUs.

Step 5: the OLT processes the found abnormal ONU (the processing may be that the OLT employs a unicast or multicast message to command the abnormal ONU to shut down its own laser or command the abnormal ONU to change the emission wavelength and/or downstream wavelength of its own laser, or the OLT disconnects the branch fiber connecting the abnormal ONU); or the OLT continues to locate the abnormal ONU, and after the OLT resolves the problem of abnormal ONU, the OLT can select to command the ONU which adopts the new wavelength in step 4 to restore to the wavelength n initially allocated thereto by the OLT (the concept of wavelength n contains upstream wavelength and/or downstream wavelength).

In this embodiment, the new wavelength allocated by the OLT to the ONU may be the wavelength allocated to but temporarily not used by another ONU, or a wavelength not allocated temporarily, or a standby wavelength.

In this embodiment, the OLT may send wavelength allocation information shown in Table 1 to the ONU via a PLOAM message and may also send the wavelength allocation information to the ONU via an ONU management and control interface (OMCI) message or an extended operations, administration and maintenance (eOAM) message or other newly defined messages.

In this embodiment, the OLT does not encrypt the Assign_ONU_Wavelength message sent to the ONU. However, in other embodiments, the OLT may encrypt the Data domain in the Assign_ONU_Wavelength message, and the encryption key can be a key negotiated by the OLT and the ONU in advance and stored locally, or a key sent by the OLT to the ONU, or a key sent by the ONU to the OLT, or a key obtained by the OLT and the ONU according to a predefined algorithm by means of local independent calculation, or a key obtained using a standard defined method. After receiving the encrypted Assign_ONU_Wavelength message sent by the OLT, the ONU decrypts the Data domain in the Assign_ONU_Wavelength, obtains the wavelength allocated thereto by the OLT, and adjusts the emission wavelength of its own laser to the upstream wavelength allocated by the OLT in the Assign_ONU_Wavelength message. The nth ONU and the OLT use the new upstream wavelength to send and receive upstream data, which restores the upstream data transmission of the nth ONU. In other embodiments, the OLT may also encrypt a portion in the Assign_ONU_Wavelength message, the portion containing the Data domain, or encrypt other contents in the Assign_ONU_Wavelength message except the ONU-ID part, or encrypt the entire Assign_ONU_Wavelength message. In this embodiment, the OLT commands, via the Assign_ONU_Wavelength message, the nth ONU to adjust the emission wavelength of its own laser to the upstream wavelength allocated to the ONU by the OLT. In other embodiments, the OLT may command, via the Assign_ONU_Wavelength message, the nth ONU to adjust the emission wavelength of its own laser to the upstream wavelength allocated to the ONU by the OLT and adjust the receiving wavelength to the downstream wavelength allocated to the ONU by the OLT, and in such a case, the content of the Data domain in the Assign_ONU_Wavelength message is the upstream wavelength and downstream wavelength values allocated to the ONU by the OLT; or the OLT sends two messages to the ONU to respectively command the ONU to adjust the upstream wavelength and downstream wavelength values.

In this embodiment, the upstream wavelength may be the same as the downstream wavelength and may also be different from the downstream wavelength.

### Embodiment III (OFDM system, subcarrier change by command)

An OLT allocates, to each ONU in a PON system connected thereto, one or more subcarriers or subcarrier groups for transmitting upstream data and demodulating downstream data, wherein the subcarriers allocated to different ONUs are different from each other, or the subcarriers contained in different subcarrier groups are different from each other, and the number of subcarriers protected by each subcarrier group may be the same or may be different. At the OLT side, the OLT respectively modulates the data intended for each ONU to a subcarrier corresponding to this ONU and then sends same to the corresponding ONU, and demodulates the data received from each ONU using the subcarrier corresponding to this ONU.

When the OLT detects that the ONU corresponding to the mth subcarrier (or subcarrier group) sends upstream data using the subcarrier (or subcarrier group) corresponding to the nth ONU, if at this moment, the nth ONU does not send any upstream data and the upstream data sent by the mth ONU carries its own identity information (such as ONU identification information, ONU serial number, ONU logic link identifier or ONU media access control address information) ; or when the OLT does not receive the upstream data sent by the ONU the subcarrier of which is the mth subcarrier and the OLT cannot normally parse the upstream data sent by the ONU the subcarrier of which is the nth subcarrier; or when the OLT does not receive the upstream data sent by the ONU the subcarrier of which is the mth subcarrier and the OLT receives the upstream data sent by this ONU over an unallocated subcarrier, then the OLT sends to the mth ONU a PLOAM message shown in Table 1. As shown in Table 1, the first and second bytes of the Assign_ONU_sub-Carrier message hold the value of the ONU-ID, which indicates that this message is intended for an ONU the ONU-ID value of which is ONU-ID1; the content of the third byte indicates that the type of this PLOAM message is the structure information type of the Assign_ONU_sub-Carrier message; the fourth byte holds the serial number of the PLOAM message; and the contents of the fifth to the fortieth bytes are the subcarrier (or subcarrier group) allocated by the OLT to the ONU, and the forty-oneth to the forty-eighth bytes hold a message verification code for message integrity check. The OLT commands, via the Assign_ONU_sub-Carrier message, the mth ONU to adjust its own subcarrier to the subcarrier (or subcarrier group) allocated to the ONU by the OLT. After receiving the Assign_ONU_sub-Carrier message sent by the OLT, the mth ONU adjusts its own subcarrier to the subcarrier allocated by the OLT in the Assign_ONU_sub-Carrier message.

**Table 2 Structure diagram of Assign_ONU_sub-Carrier message**

| Assign_ONU_sub_Carrier message | | |
|---|---|---|
| Byte | Content | Description |
| 1-2 | ONU-ID1 | The content of these bytes is ONU-ID1, which indicates that this message is intended for the ONU the ONU-ID value of which is ONU-ID1 |
| 3 | xxxxxxxx | The message type is defining "Assign_ONU_sub-Carrier" |
| 4 | SeqNo | The serial number of the PLOAM message |
| 5-40 | Data | The content of the data domain (Data) the subcarrier allocated to the ONU by the OLT |
| 41-48 | MIC | Message integrity check |

If the OLT cannot correctly parse the upstream data sent by the nth ONU, the OLT and the ONU adopt the following main steps to restore upstream communication.

Step 1: the OLT commands, via the Assign_ONU_sub-Carrier message, the nth ONU to adjust its own subcarrier to the subcarrier allocated to the ONU by the OLT.

Step 2: after receiving the Assign_ONU_sub-Carrier message sent by the OLT, the nth ONU adjusts its own subcarrier to the subcarrier allocated by the OLT in the Assign_ONU_sub-Carrier message.

After the above two steps, the nth ONU and the OLT use the new subcarrier to send and receive upstream data, which restores the upstream data transmission of the nth ONU.

In this embodiment, the OLT may send subcarrier allocation information shown in Table 2 to the ONU via a PLOAM message, and may also send the subcarrier allocation information to the ONU via an ONU management and control interface (OMCI) message or an extended operations, administration and maintenance (eOAM) message or other newly defined messages.

In this embodiment, the OLT does not encrypt the Assign_ONU_sub-Carrier message sent to the ONU. However, in other embodiments, the OLT may encrypt the Data domain in the Assign_ONU_sub-Carrier message, and the encryption key can be a key negotiated by the OLT and the ONU in advance and stored locally, or a key sent by the OLT to the ONU, or a key sent by the ONU to the OLT, or a key obtained by the OLT and the ONU according to a predefined algorithm by means of local independent calculation, or a key obtained using a standard defined method. After receiving the encrypted Assign_ONU_sub-Carrier message sent by the OLT, the ONU decrypts the Data domain in the Assign_ONU_sub-Carrier, obtains the subcarrier allocated thereto by the OLT, and adjusts its own subcarrier for sending upstream data to the subcarrier allocated by the OLT in the Assign_ONU_sub-Carrier message. The nth ONU and the OLT use the new subcarrier to send and receive upstream data, which restores the upstream data transmission of the nth ONU. In other embodiments, the OLT may also encrypt a portion in the Assign_ONU_sub-Carrier message, the portion containing the Data domain, or encrypt other contents in the Assign_ONU_sub-Carrier message except the ONU-ID part, or encrypt the entire Assign_ONU_sub-Carrier message.

In this embodiment, the subcarrier for sending data may be the same as the subcarrier for receiving data and may also be different from the subcarrier for receiving data.

### Embodiment IV (OFDM system, subcarrier change by command)

An OLT allocates, to each ONU in a PON system connected thereto, one or more subcarriers (or subcarrier groups) for receiving downstream data and sending upstream data. After receiving the above information sent by the OLT, the ONU sends data and receives data using the above subcarrier (or subcarrier group). The subcarriers (or subcarrier groups) allocated to different ONUs by the OLT are different from each other.

When the OLT finds that the upstream data is abnormal, the OLT and the ONU adopt the following steps to restore upstream communication.

Step 1: the OLT sends to the ONU corresponding to the mth subcarrier a physical layer operations, administration and maintenance (PLOAM) message shown in Table 2 under one of the following situation: the ONU corresponding to the nth subcarrier (or subcarrier group) does not send any upstream data but the OLT detects that the ONU which carries the identity information (such as ONU identification information, ONU serial number, ONU logic link identifier or ONU media access control address information) of the ONU corresponding to the mth subcarrier adopts the nth subcarrier to send upstream data; or, the OLT does not receive the upstream data sent by the ONU corresponding to the mth subcarrier and the OLT cannot normally parse the upstream data sent by the ONU corresponding to the nth subcarrier; or, the OLT does not receive the upstream data sent by the ONU corresponding to the mth subcarrier and the OLT receives the upstream data sent by the ONU which carries the identity information of the ONU corresponding to the mth subcarrier over an unallocated subcarrier; or, the OLT does not receive the upstream data sent by the ONU corresponding to the mth subcarrier, the ONU cannot normally parse the upstream data sent by the ONU corresponding to the nth subcarrier, and after the OLT commands the ONU corresponding to the nth subcarrier to stop sending upstream data, the OLT still receives the upstream data over this subcarrier; or, the OLT does not receive the upstream data sent by the ONU corresponding to the mth subcarrier, the OLT cannot normally parse the upstream data sent by the ONU corresponding to the nth subcarrier and the optical power value of the nth subcarrier received by the OLT increases or the optical power value jumps (sudden change in the optical power). As shown in Table 2, the first and second bytes of the Assign_ONU_sub-Carrier message hold the value of the ONU-ID, which indicates that this message is intended for an ONU the ONU-ID value of which is ONU-ID1; the content of the third byte indicates that the type of this PLOAM message is the structure information type of the Assign_ONU_sub-Carrier message; the fourth byte holds the serial number of the PLOAM message; and the contents of the fifth to the fortieth bytes are the subcarrier allocated by the OLT to the ONU, and the forty-oneth to the forty-eighth bytes hold a message verification code for message integrity check. The OLT commands, via the Assign_ONU_sub-Carrier message, the mth ONU to adjust its own subcarrier for sending data and receiving data to the subcarrier (or subcarrier group) allocated to the ONU by the OLT.

Step 2: after receiving the Assign_ONU_sub-Carrier message sent by the OLT, the ONU corresponding to the mth subcarrier adjusts its own subcarrier (or subcarrier group) to the subcarrier (or subcarrier group) allocated by the OLT in the Assign_ONU_sub-Carrier message.

The OLT detects whether the ONU corresponding to the mth subcarrier has completed subcarrier adjustment, and if the OLT receives the upstream data sent by the above ONU using the subcarrier allocated in step 1, then the OLT detects whether the upstream data goes back to normal, and if the upstream data goes back to normal, the OLT and the ONU establish normal communication. If the OLT does not receive the upstream data sent by the ONU corresponding to the mth subcarrier by employing the newly allocated subcarrier and receives the upstream data sent by the ONU corresponding to the mth subcarrier by employing another subcarrier, then the OLT determines that the ONU corresponding to the mth subcarrier is an abnormal ONU. The OLT processes the found abnormal ONU (the processing may be that the OLT employs a unicast or multicast message to command the abnormal ONU to shut down its own laser or command the abnormal ONU to change its own subcarrier, or the OLT disconnects the branch fiber connecting the abnormal ONU).

In this embodiment, the subcarrier for sending data may be the same as the subcarrier for receiving data and may also be different from the subcarrier for receiving data.

### Embodiment V (OFDM)

If the OLT cannot correctly parse the upstream data sent by the ONU corresponding to the nth subcarrier, the OLT and the ONU adopt some or all of the following main steps or some contents in all the steps to restore upstream communication.

Step 1: after the OLT commands the ONU corresponding to the nth subcarrier to stop sending upstream data, if the upstream data goes back to normal, then the OLT determines that this ONU is an abnormal ONU, and then step 5 is executed; if the OLT continues receiving the upstream data corresponding to the nth subcarrier and the upstream data carries identity information of an ONU, the OLT determines that the ONU which carries this identity information is an abnormal ONU. If the identity information of this ONU is not that of the ONU corresponding to the nth subcarrier, then the OLT commands the ONU corresponding to the nth subcarrier to restore upstream data transmission, and then step 5 is executed. If the OLT continues receiving upstream data corresponding to the nth subcarrier, and the upstream data cannot be parsed normally, then step 2 is executed.

Step 2: the OLT commands, via the Assign_ONU_sub-Carrier message, the ONU corresponding to the nth subcarrier to adjust its own subcarrier to the subcarrier allocated to the ONU by the OLT.

Step 3: after receiving the Assign_ONU_sub-Carrier message sent by the OLT, the ONU adjusts its own subcarrier to the subcarrier allocated by the OLT in the Assign_ONU_sub-Carrier message.

Step 4: the OLT detects whether the ONU adopts the newly allocated subcarrier to send upstream data. If the OLT does not receive the upstream data sent by the ONU adopting the newly allocated subcarrier and the OLT still receives the upstream data sent by adopting the nth subcarrier, then the OLT determines that the ONU is an abnormal ONU and then step 5 is executed. If the OLT receives the upstream data sent by the ONU adopting the newly allocated subcarrier and the OLT still receives the upstream data sent by adopting the nth subcarrier, then the OLT and the ONU adopting the new subcarrier have restored upstream communication, and if the identity information of the ONU is carried in the upstream data sent by adopting the nth subcarrier, then the OLT determines that the ONU which carries this identity information is an abnormal ONU, and then step 5 is executed; and if the OLT still cannot normally parse the upstream data sent by adopting the nth subcarrier, then the OLT determines that the those ONUs the upstream data of which is received and those ONUs the upstream data sent by which cannot be parsed by the OLT normally are abnormal ONUs.

Step 5: the OLT processes the found abnormal ONU (the processing may be that the OLT employs a unicast or multicast message to command the abnormal ONU to shut down its own laser or command the abnormal ONU to change the emission wavelength and/or downstream wavelength of its own laser, or the OLT disconnects the branch fiber connecting the abnormal ONU); or the OLT continues to locate the abnormal ONU, and after the OLT resolves the problem of abnormal ONU, the OLT can select to command the ONU which adopts the new subcarrier in step 4 to restore to the nth subcarrier initially allocated thereto by the OLT.

In this embodiment, the new subcarrier allocated by the OLT to the ONU may be the subcarrier allocated to but temporarily not used by another ONU, or a subcarrier not allocated temporarily, or a standby subcarrier.

In this embodiment, the OLT may send subcarrier allocation information shown in Table 2 to the ONU via a PLOAM message and may also send the subcarrier allocation information to the ONU via an ONU management and control interface (OMCI) message or an extended operations, administration and maintenance (eOAM) message or other newly defined messages.

In this embodiment, the OLT does not encrypt the Assign_ONU_sub-Carrier message sent to the ONU. However, in other embodiments, the OLT may encrypt the Data domain in the Assign_ONU_sub-Carrier message, and the encryption key can be a key negotiated by the OLT and the ONU in advance and stored locally, or a key sent by the OLT to the ONU, or a key sent by the ONU to the OLT, or a key obtained by the OLT and the ONU according to a predefined algorithm by means of local independent calculation, or a key obtained using a standard defined method. After receiving the encrypted Assign_ONU_sub-Carrier message sent by the OLT, the ONU decrypts the Data domain in the Assign_ONU_sub-Carrier and obtains the subcarrier allocated thereto by the OLT, and adjusts its own subcarrier for sending upstream data to the subcarrier allocated by the OLT in the Assign_ONU_sub-Carrier message. The nth ONU and the OLT use the new subcarrier to send and receive upstream data, which restores the upstream data transmission of the nth ONU. In other embodiments, the OLT may also encrypt a portion in the Assign_ONU_sub-Carrier message, the portion containing the Data domain, or encrypt other contents in the Assign_ONU_sub-Carrier message except the ONU-ID part, or encrypt the entire Assign_ONU_sub-Carrier message.

In this embodiment, the subcarrier for sending data may be the same as the subcarrier for receiving data and may also be different from the subcarrier for receiving data.

### Embodiment VI (WDM system, stop sending data by command)

An OLT allocates one downstream wavelength for receiving a downstream signal and one upstream wavelength for sending upstream data for each ONU connected into the PON system. After the ONU receives the above information sent by the OLT, the ONU adjusts the emission wavelength of its own laser to the above upstream wavelength and adjusts the receiving wavelength of its own receiver to the above downstream wavelength. The upstream wavelengths allocated to respective ONUs by the OLT are different from each other.

If the OLT cannot correctly parse the upstream data sent by the nth ONU, then the OLT and the ONU adopt the following main steps to restore upstream communication.

Step 1: the OLT sends a PLOAM message shown in Table 3 to the ONU. As shown in Table 3, the first and second bytes of the Send_upstream-data message hold the value of ONU-ID, which indicates that this message is intended for an ONU the ONU-ID value of which is ONU-ID1; the content of the third byte indicates that the type of this PLOAM message is the structure message type of the Send_upstream-data message; the fourth byte holds the serial number of this PLOAM message; the value of the fifth byte being 1 indicates to command the ONU to resume sending upstream data; the value being 0 indicates to command the ONU to stop sending upstream data; the contents of the sixth to the fortieth bytes are reserved domains; and the forty-oneth to the forty-eighth bytes hold a message verification code for message integrity check. In this embodiment, the value of the fifth byte of the Send_upstream-data message sent by the OLT is written to be 0 to command the nth ONU to stop sending upstream data.

**Table 3 Structure table of Send_upstream-data message**

| Send_upstream-data message | | |
|---|---|---|
| Byte | Content | Description |
| 1-2 | ONU-ID1 | The content of this byte is ONU-ID1, which indicates that this message is intended for the ONU the ONU-ID value of which is ONU-ID1 |
| 3 | xxxxxxxx | The message type is defining "Send_ upstream-data" |
| 4 | SeqNo | The serial number of the PLOAM message |
| 5 | xxxxxxxx | The value being 1 indicates to command the ONU to resume sending upstream data; and the value being 0 indicates to command the ONU to stop sending upstream data |
| 6-40 | Data | Reserved |
| 41-48 | MIC | Message integrity check |

Step 2: the nth ONU receives the command sent by the OLT and then stops sending upstream data.

Step 3: the OLT detects the signal of the nth upstream wavelength and determines the identity of the ONU which currently adopts the nth upstream wavelength to send data. If the OLT identifies the identity of the ONU (for example, the upstream data currently sent by the ONU carries the identity information of this ONU, such as ONU identification information, ONU serial number, ONU logic link identifier or ONU media access control address information), then the OLT sends a PLOAM message shown in Table 1 via a unicast or a broadcast channel to command the ONU to adjust its own wavelength to the upstream wavelength allocated to the ONU by the OLT during the registration of the ONU (in other embodiments, the OLT commands, via the Assign_ONU_Wavelength message, the corresponding ONU to adjust the upstream wavelength and the downstream wavelength of the ONU to the upstream wavelength and the downstream wavelength allocated to the ONU by the OLT during the registration of the ONU), wherein the value of the Data domain of this PLOAM message is the upstream wavelength value (in other embodiments, upstream wavelength value and downstream wavelength value) allocated to the ONU by the OLT during the registration of the ONU. If the OLT receives the data sent by the ONU using this upstream wavelength allocated by the OLT, then step 4 is executed. If the OLT determines that the ONU continues to use the upstream wavelength of the nth ONU to send data, or the OLT cannot identify the identity of the ONU which currently uses the upstream wavelength of the nth ONU to send data, step 5 is executed when there is free wavelength; and step 7 is executed if there is no free wavelength.

Step 4: the OLT sends to the nth ONU a Send_upstream-data message in which the value of the fifth byte is set to be 1 to command the nth ONU to resume sending upstream data, and then step 6 is executed.

Step 5: the OLT commands, via the Assign_ONU_Wavelength message, the nth ONU to adjust the emission wavelength of its own laser to the upstream wavelength allocated to the ONU by the OLT.

(In other embodiments, the OLT commands, via the Assign_ONU_Wavelength message, the nth ONU to adjust its own upstream wavelength and downstream wavelength to the upstream wavelength and downstream wavelength allocated to the ONU by the OLT). After receiving the Assign_ONU_Wavelength message sent by the OLT, the nth ONU adjust the emission wavelength of its own laser to the upstream wavelength allocated by the OLT in the Assign_ONU_Wavelength message (in other embodiments, the ONU adjusts its own upstream wavelength and downstream wavelength to the upstream wavelength and downstream wavelength allocated to the ONU by the OLT). If the OLT receives the upstream data sent by the ONU using the newly allocated upstream wavelength, then step 6 is executed, otherwise, step 7 is executed.

Step 6: the nth ONU resumes sending upstream data, and jump out this flow.

Step 7: the OLT determines that those ONUs which do not send upstream data and those ONUs the upstream data sent by which cannot be normally parsed by the OLT are abnormal ONUs.

In this embodiment, the OLT may send information shown in Table 3 for stopping sending upstream data and resuming upstream data transmission to the ONU via a PLOAM message, and may also send information for stopping sending upstream data and resuming upstream data transmission to the ONU via an OMCI or an eOAM message.

In this embodiment, the OLT sends a Send_upstream-data to the ONU to command the ONU to stop sending upstream data, and the OLT may also send a PLOAM message with the name Deactivate_ONU-ID, a PLOAM message with the name Disable_Serial_Number, a newly established OMCI or eOAM message or other newly defined messages to the ONU to notify the ONU to stop sending upstream data. In this embodiment, the OLT does not encrypt the Send_upstream-data message intended for the ONU. However, in other embodiments, the OLT may encrypt the fifth byte domain in the Assign_ONU_Wavelength message, and the encryption key can be a key negotiated by the OLT and the ONU in advance and stored locally, or a key sent by the OLT to the ONU, or a key sent by the ONU to the OLT, or a key obtained by the OLT and the ONU according to a predefined algorithm by means of local independent calculation, or a key obtained using a standard defined method. After receiving the encrypted Send_upstream-data message sent by the OLT, the ONU decrypts the domain of the fifth byte in Send_upstream-data and then obtains a command regarding whether the OLT allows the ONU to send upstream data, and the nth ONU stops sending upstream data or resume sending upstream data according to the command of the OLT. In other embodiments, the OLT may also encrypt a portion in the Send_upstream-data message, the portion containing the domain of the fifth byte, or encrypt other contents in the Send_upstream-data message except the ONU-ID part, or encrypt the entire Send_upstream-data message.

In this embodiment, the upstream wavelength may be the same as the downstream wavelength and may also be different from the downstream wavelength.

### Embodiment VII (OFDM system, stop sending data by command)

An OLT allocates, to each ONU in a PON system connected thereto, one or more subcarriers for transmitting upstream data and demodulating upstream data, wherein the subcarriers allocated to different ONUs are different from each other. At the OLT side, the OLT respectively modulates the data intended for each ONU to a subcarrier corresponding to this ONU and then sends same to the corresponding ONU, and demodulates the data received from each ONU using the subcarrier corresponding to this ONU.

If the OLT cannot correctly parse the upstream data sent by the nth ONU, then the OLT and the ONU adopt the following main steps to restore upstream communication.

Step 1: the OLT sends a PLOAM message shown in Table 3 to the ONU. As shown in Table 3, the first and second bytes of the Send_upstream-data message hold the value of ONU-ID, which indicates that this message is intended for an ONU the ONU-ID value of which is ONU-ID1; the content of the third byte indicates that the type of this PLOAM message is the structure message type of the Send_upstream-data message; the fourth byte holds the serial number of this PLOAM message; the value of the fifth byte being 1 indicates to command the ONU to resume sending upstream data; the value of the fifth byte being 0 indicates to command the ONU to stop sending upstream data; the contents of the sixth to the fortieth bytes are reserved domains; and the forty-oneth to the forty-eighth bytes hold a message verification code for message integrity check. In this step, the value of the fifth byte of the Send_upstream-data message sent by the OLT is written to be 0 to command the nth ONU to stop sending upstream data.

Step 2: the nth ONU receives the command sent by the OLT and then stops sending upstream data.

Step 3: the OLT determines the identity of the ONU which currently adopts the subcarrier of the nth ONU to send data. If the OLT identifies the identity of the ONU (for example, the upstream data currently sent by the ONU carries the identity information of this ONU, such as ONU identification information, ONU serial number, ONU logic link identifier or ONU media access control address information), then the OLT commands, via a PLOAM message shown in Table 2, the ONU to adjust its own subcarrier to the subcarrier allocated to the ONU by the OLT during the registration of the ONU, wherein the value of the Data domain of this PLOAM message is the subcarrier allocated to the ONU by the OLT during the registration of the ONU. If the OLT detects that the ONU no longer uses the subcarrier of the nth ONU to send data, then step 4 is executed. If the OLT detects that the ONU continues to use the subcarrier of the nth ONU to send data, or the OLT cannot identify the identity of the ONU which currently uses the subcarrier of the nth ONU to send data, then step 5 is executed.

Step 4: the OLT sends to the nth ONU a Send_upstream-data message in which the value of the fifth byte is set to be 1 to command the nth ONU to resume sending upstream data, and then step 6 is executed.

Step 5: the OLT commands, via the Assign_ONU_sub-Carrier message, the nth ONU to adjust its own subcarrier to the subcarrier allocated to the ONU by the OLT, and after receiving the Assign_ONU_sub-Carrier message sent by the OLT, the nth ONU adjusts its own subcarrier to the subcarrier allocated by the OLT in the Assign_ONU_sub-Carrier message.

Step 6: the nth ONU resumes sending upstream data.

In this embodiment, the OLT sends a Send_upstream-data to the ONU to command the ONU to stop sending upstream data, and the OLT may also send a PLOAM message with the name Deactivate_ONU-ID, a PLOAM message with the name Disable_Serial _Number, a newly established OMCI or eOAM message or other newly defined messages to the ONU to notify the ONU to stop sending upstream data.

In this embodiment, the OLT does not encrypt the Send_upstream-data message intended for the ONU. However, in other embodiments, the OLT may encrypt the fifth byte domain in the Send_upstream-data message, and the encryption key can be a key negotiated by the OLT and the ONU in advance and stored locally, or a key sent by the OLT to the ONU, or a key sent by the ONU to the OLT, or a key obtained by the OLT and the ONU according to a predefined algorithm by means of local independent calculation, or a key obtained using a standard defined method. After receiving the encrypted Send_upstream-data message sent by the OLT, the ONU decryptes the domain of the fifth byte in the Send_upstream-data and then obtains a command regarding whether the OLT allows the ONU to send upstream data, and the nth ONU stops sending upstream data or resumes sending upstream data according to the command of the OLT. In other embodiments, the OLT may also encrypt a portion in the Send_upstream-data message, the portion containing the domain of the fifth byte, or encrypt other contents in the Send_upstream-data message except the ONU-ID part, or encrypt the entire Send_upstream-data message.

In this embodiment, the subcarrier for sending data may be the same as the subcarrier for receiving data and may also be different from the subcarrier for receiving data.

### Embodiment VIII (OFDM system, stop sending data by command)

An OLT allocates one or more subcarriers for receiving downstream data and sending upstream data to each ONU in a PON system connected thereto. After receiving the above information sent by the OLT, the ONU adjusts its own subcarrier. The subcarriers allocated to different ONUs by the OLT are different from each other.

If the OLT cannot correctly parse the upstream data sent by the ONU corresponding to the nth subcarrier, the OLT and the ONU adopt the following main steps to restore upstream communication.

Step 1: the OLT sends a PLOAM message shown in Table 3 to the ONU. As shown in Table 3, the first and second bytes of the Send_upstream-data message hold the value of ONU-ID, which indicates that this message is intended for an ONU the ONU-ID value of which is ONU-ID1; the content of the third byte indicates that the type of this PLOAM message is the structure information type of the Send_upstream-data message; the fourth byte holds the serial number of this PLOAM message; the value of the fifth byte being 1 indicates to command the ONU to restore sending upstream data; the value of the fifth byte being 0 indicates to command the ONU to stop sending upstream data; the contents of the sixth to the fortieth bytes are reserved domains; and the forty-oneth to the forty-eighth bytes hold a message verification code for message integrity check. In this step, the value of the fifth byte of the Send_upstream-data message sent by the OLT is written to be 0 to command the nth ONU to stop sending upstream data.

Step 2: the nth ONU receives the command sent by the OLT and then stops sending upstream data.

Step 3: the OLT detects the signal of the nth subcarrier and determines the identity of the ONU which currently adopts the nth subcarrier to send data. If the OLT identifies the identity of the ONU (for example, the upstream data currently sent by the ONU carries the identity information of this ONU, such as ONU identification information, ONU serial number, ONU logic link identifier or ONU media access control address information), then the OLT sends a PLOAM message shown in Table 2 via a unicast or a broadcast channel to command the ONU to adjust its own subcarrier to the subcarrier allocated to the ONU by the OLT during the registration of the ONU, wherein the value of the Data domain of the PLOAM message is the subcarrier allocated to the ONU by the OLT during the registration of the ONU. If the OLT receives the data sent by the ONU using the subcarrier allocated by the OLT, then step 4 is executed. If the OLT detects that the ONU continues to use the nth subcarrier to send data, or the OLT cannot identify the identity of the ONU which currently uses the nth subcarrier to send data, then step 5 is executed if there is free subcarrier; and step 7 is executed if there is no free subcarrier.

Step 4: the OLT sends to the nth ONU a Send_upstream-data message in which the value of the fifth byte is set to be 1 to command the nth ONU to restore sending upstream data, and then step 6 is executed.

Step 5: the OLT commands, via the Assign_ONU_sub-Carrier message, the nth ONU to adjust its own subcarrier to the subcarrier allocated to the ONU by the OLT, and after receiving the Assign_ONU_sub-Carrier message sent by the OLT, the nth ONU adjusts its own subcarrier to the subcarrier allocated by the OLT in the Assign_ONU_sub-Carrier message. If the OLT receives the upstream data sent by the ONU using the newly allocated subcarrier, then step 6 is executed, otherwise, step 7 is executed.

Step 6: the nth ONU resumes sending upstream data, and jump out this flow.

Step 7: the OLT determines that those ONUs which do not send upstream data and those ONUs the upstream data sent by which cannot be normally parsed by the OLT are abnormal ONUs.

In this embodiment, the OLT can send information shown in Table 3 for stopping sending upstream data and resuming upstream data transmission to the ONU via a PLOAM message, and may also send information for stopping sending upstream data and resuming upstream data transmission to the ONU via an OMCI or an eOAM message.

In this embodiment, the OLT sends a Send_upstream-data to the ONU to command the ONU to stop sending upstream data, and the OLT may also send a PLOAM message with the name Deactivate_ONU-ID, a PLOAM message with the name Disable_Serial _Number, a newly established OMCI or eOAM message or other newly defined messages to the ONU to notify the ONU to stop sending upstream data. In this embodiment, the OLT does not encrypt the Send_upstream-data message intended for the ONU. However, in other embodiments, the OLT may encrypt the fifth byte domain in the Send_upstream-data message, and the encryption key can be a key negotiated by the OLT and the ONU in advance and stored locally, or a key sent by the OLT to the ONU, or a key sent by the ONU to the OLT, or a key obtained by the OLT and the ONU according to a predefined algorithm by means of local independent calculation, or a key obtained using a standard defined method. After receiving the encrypted Send_upstream-data message sent by the OLT, the ONU decryptes the domain of the fifth byte in the Send_upstream-data and then obtains a command regarding whether the OLT allows this ONU to send upstream data, and the nth ONU stops sending upstream data or resumes sending upstream data according to the command of the OLT. In other embodiments, the OLT may also encrypt a portion in the Send_upstream-data message, the portion containing the domain of the fifth byte, or encrypt other contents in the Send_upstream-data message except the ONU-ID part, or encrypt the entire Send_upstream-data message.

In this embodiment, the subcarrier for sending data may be the same as the subcarrier for receiving data and may also be different from the subcarrier for receiving data.

### Embodiment IX (TDM system, reallocate time slot and encrypt command)

An OLT allocates an upstream time slot for transmitting upstream data to each ONU in a PON system connected thereto, wherein the upstream time slots allocated to different ONUs are different from each other.

When the OLT cannot normally parse the upstream data sent by the nth ONU, the OLT sends the bandwidth allocation shown in Fig. 2 to the nth ONU and encrypts the contents of Start Time and Grant Size in the Allocation structure of the corresponding bandwidth allocation, with the encryption key being a key for encrypting the GPON encapsulation method (GEM) frame by the OLT. After receiving the bandwidth allocation allocated by the OLT, the ONU decrypts the bandwidth allocation using the key of the GEM stored locally, obtains the upstream time slot allocated thereto by the OLT for transmitting upstream data, and sends upstream data in the upstream time slot, which restores the upstream data transmission of the ONU.

In this embodiment, the OLT may send bandwidth allocation information to the ONU via a PLOAM message, and may also send bandwidth allocation information to the ONU via an OMCI or an eOAM message.

In this embodiment, the OLT may send a PLOAM message to the ONU to notify the ONU that the current bandwidth allocation content has been encrypted and may also send the information indicating that the current bandwidth allocation information has been encrypted to the ONU via an ONU management and control interface (OMCI) message or an extended operations, administration and maintenance (eOAM) message or other newly defined messages.

In this embodiment, the OLT encrypts the contents of Start Time and Grant Size in the Allocation structure. In other embodiments, the OLT may also encrypt a part of contents including Start Time and Grant Size in the Allocation structure, may also encrypt all the contents in the Allocation structure except Alloc-ID, and may also encrypt the entire Allocation structure.

### Embodiment X (hybrid PON system, wavelength adjustment)

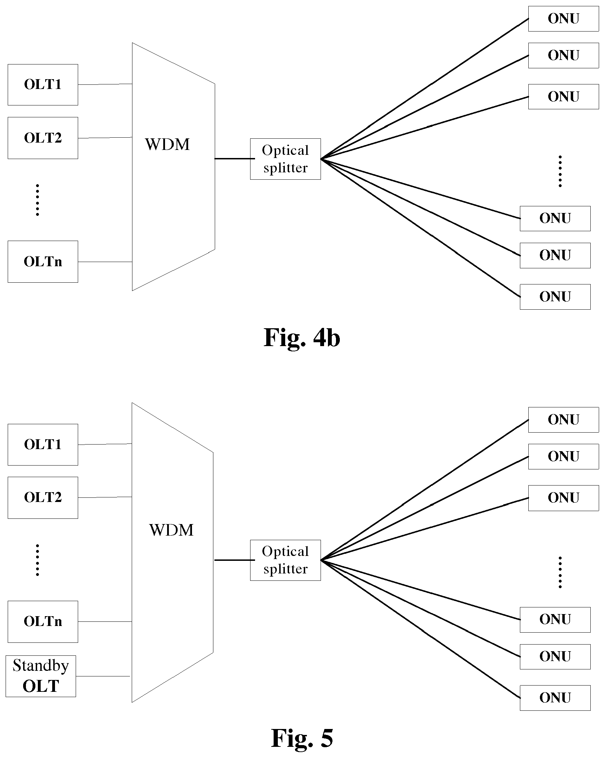

The topology structure of a hybrid PON system is as shown in Figs. 4a and 4b. Each OLT manages a group of ONUs, wherein the upstream wavelengths (subcarriers) of this group of ONUs for sending upstream data are the same, and the downstream wavelengths (subcarriers) for receiving downstream data are also the same, and different ONUs in the group of ONUs transmit upstream data in a time division multiplexing manner. The downstream wavelengths (subcarriers) of different OLTs are different, and the upstream wavelengths (subcarriers) used by each group of ONUs managed by different OLTs are also different. Each ONU can adjust the downstream wavelength (subcarrier) for receiving downstream signals and the upstream wavelength (subcarrier, the upstream subcarrier and the downstream subcarrier may be the same and may also be different) for sending upstream data according to the command of the OLT.

Each OLT stores downstream wavelength values (subcarriers) for sending downstream data and upstream wavelength values (subcarriers) for receiving upstream data of other OLTs. Each OLT allocates an uplink bandwidth to a group of ONUs managed thereby in a time division multiplexing manner, and each ONU sends data in the uplink bandwidth allocated thereto by the OLT. When one OLT such as OLT1 cannot normally parse the upstream data of a part of the upstream time slots or all the upstream time slots; or the OLT1 cannot normally parse the upstream data of a part of the upstream time slots or all the upstream time slots, and the OLT 1 still receives upstream data in at least one time slot after commanding the ONU of this time slot to stop sending upstream data; or the OLT1 cannot normally parse the upstream data of a part of the upstream time slots or all the upstream time slots and the optical power value over the time slot received by the OLT1 increases or the optical power value over the time slot jumps (sudden change in the optical power value), then the OLT1 and the ONU adopt some or all of the following steps to restore upstream communication.

Step 1: the OLT1 communicates with other OLTs or the network management personal or system and obtains information of other normally working OLTs.

Step 2: the OLT1 sends an Assign_ONU_Wavelength (Assign_ONU_sub-Carrier) message shown in Table 4 to one ONU managed thereby, wherein the value of the Data domain in the message is the upstream wavelength and downstream wavelength values (upstream subcarrier and downstream subcarrier) allocated to the ONU by the OLT1, and the upstream wavelength and downstream wavelength values (upstream subcarrier and downstream subcarrier) allocated to the ONU by the OLT1 are the upstream wavelength and downstream wavelength values (upstream subcarrier and downstream subcarrier) corresponding to a group of ONUs managed by another OLT such as OLT2 (in other embodiments, it may also be other OLTs, such as OLT3) which works normally shown in Figs. 4a and 4b.

**Table 4 Structure diagram of Assign_ONU_Wavelength (Assign_ONU_sub-Carrier) message**

| Assign_ONU_Wavelength (Assign_ONU_sub-Carrier) message | | |
|---|---|---|
| Byte | Content | Description |
| 1-2 | ONU-ID1 | The content of this byte is ONU-ID1, which indicates that this message is intended for the ONU the ONU-ID value of which is ONU-ID 1. |
| 3 | xxxxxxxx | The message type is defining "Assign_UP BWmap" |
| 4 | SeqNo | The serial number of the PLOAM message |
| 5-40 | Data | The content of the data domain (Data), the upstream wavelength and downstream wavelength allocated to the ONU by the OLT (the content of the data domain (Data) is the subcarrier allocated to the ONU by the OLT.) |
| 41-48 | MIC | Message integrity check |

Step 3: if the ONU can respond to the command of the OLT1, then after receiving the information sent by the OLT1, the ONU adjusts the emission wavelength (subcarrier for sending data) of its own laser to the upstream wavelength (subcarrier) corresponding to the ONU group managed by the OLT2, and adjusts the receiving wavelength (subcarrier for receiving data) of its own receiver to the downstream wavelength (subcarrier) corresponding to the ONU group managed by the OLT2, and the ONU and the OLT2 establish communications according to the related art.

Step 4: the OLT1 detects whether the upstream data can be normally parsed, and if the upstream data restores, then the OLT1 notifies the OLT2 of the following information: the ONU group managed by the OLT2 has an abnormal ONU, and notifies the OLT2 of the identity information of the abnormal ONU; otherwise, step 1 is executed.

In the above step, if the OLT1 still receives upstream data after the OLT1 sends an Assign_ONU_Wavelength (Assign_ONU_sub-Carrier) message to all the ONUs in the ONU group managed thereby, then the OLT1 can communicate with the network manangement system or other OLTs to obtain the information of the ONU which successfully switches from the OLT1 to other OLTs. The OLT1 compares the above information with the information of all the ONUs stored therein to locate the abnormal ONU, and after the locating of the abnormal ONU is completed, the OLT1 sends to the abnormal ONU a command to shut down the laser or shut down the ONU power supply, or a command to disconnect the fiber connecting the abnormal ONU, or a command defined by other standards to resolve the problem of the abnormal ONU. After the OLT1 resolves the problem of the abnormal ONU, the OLT1 can notify the network manangement system or other OLTs to switch a part of ONUs back to the OLT1.

After a certain OLT in the system receives the notification in step 4 from the network manangement system or other OLTs, this OLT detects whether the upstream data is normal. If the upstream data is normal, then the OLT rejects the registration activation of the ONU which carries identity information of the abnormal ONU. If the OLT cannot normally parse the upstream data, then the OLT sends to the abnormal ONU a command to stop sending upstream data or shut down the laser; or, the OLT restores the upstream communication of the ONUs in the ONU group managed thereby by adopting the method in steps 1 to 4; or the OLT transfers the wavelengths of all the ONUs managed thereby before the abnormal ONU accesses to other OLTs, and then resolves the problem of the abnormal ONU, and the solution of this problem may be sending to the abnormal ONU a command to stop sending upstream data or shut down the laser, or a command to disconnect the fiber connecting the abnormal ONU. After the problem of the abnormal ONU is resolved, the OLT can notify the network manangement system or other OLTs to switch a part of ONUs back to this OLT.

In this embodiment, the OLT1 switches the ONUs in the ONU group managed thereby to other OLTs one by one. In other embodiments, the OLT1 may also group the ONUs managed thereby, wherein each group includes one or more ONUs, the OLT switches the groups of ONUs to other OLTs one by one, and the ONUs in one group can be switched to other OLTs simultaneously. In this embodiment, the OLT1 switches all the ONUs in the ONU group(s) managed thereby to the same normally working ONU, and in other embodiments, the OLT1 may also switch the ONUs in the ONU group(s) managed thereby to different normally working ONUs, which can reduce the number of ONUs managed by other normally working ONUs and reduce the influence on the uplink bandwidth of the ONUs managed by other OLTs.

In order to further reduce the influence on the sending of upstream data of the entire PON system when an abnormal ONU appears at one OLT, in other embodiments, the topology structure in Fig. 5 can be adopted. As shown in Fig. 5, there is a standby OLT in the system, and the upstream wavelength for receiving upstream data and the downstream wavelength for sending downstream data of the standby OLT are different from the upstream wavelengths for receiving upstream data and the downstream wavelengths for sending downstream data of other OLTs. When an abnormal ONU appears in the ONUs managed by a certain OLT such as OLT1, the OLT1 can switch the ONUs managed thereby to other normally working OLTs and/or the standby OLT according to the above method.

In other embodiments, the OLT and/or the network manangement system establish or maintain a list of abnormal ONUs. When a certain OLT detects an abnormal ONU, this OLT reports the identity information of the abnormal ONU to the network manangement system, and the network manangement system establishes and updates the list of abnormal ONUs locally. Alternatively, the OLT can update the list of abnormal ONUs locally. When an OLT finds an ONU which is newly connected to the system or an ONU which is re-connected to the system, after receiving the identity information of the ONU, the OLT determines whether this ONU is an abnormal ONU according to the list of abnormal ONUs, and if this ONU is an abnormal ONU, the OLT does not allow this ONU to enter a working state, and if this ONU is a normal ONU, the OLT and the ONU establish communications according to related art.

In other embodiments, the OLT1 and the ONU can adopt some or all of the following steps to restore upstream communication.

Step 1: the OLT1 communicates with other OLTs or the network manangement system and obtains information of other normally working OLTs.

Step 2: the OLT1 notifies the normally working OLT in the system such as OLT2 (in other embodiments, it may be other OLTs, such as OLT3, or the standby OLT) of the following information: the OLT1 will transfer the ONU1 to the OLT2, and sends the identity information of the ONU1 to the OLT2.

Step 3: after receiving the information sent by the OLT1 in step 2, the OLT2 does not allow the ONU1 to enter a working state at the OLT2.

Step 4: the OLT1 sends an Assign_ONU_Wavelength (Assign_ONU_sub-Carrier) message shown in Table 4 to the ONU1, wherein the value of the Data domain in the message is the upstream wavelength and downstream wavelength values (upstream subcarrier and downstream subcarrier) allocated to the ONU by the OLT1, and the upstream wavelength and downstream wavelength values (upstream subcarrier and downstream subcarrier) allocated to the ONU by the OLT1 are the upstream wavelength and downstream wavelength values (upstream subcarrier and downstream subcarrier) corresponding to a group of ONUs managed by the OLT2 (in other embodiments, it may also be other OLTs, such as OLT3).

Step 5: if the ONU can respond to the command of the OLT1, then after receiving the information sent by the OLT1, the ONU adjusts the emission wavelength (subcarrier for sending data) of its own laser to the upstream wavelength (upstream subcarrier) corresponding to the ONU group managed by the OLT2, and adjusts the receiving wavelength (subcarrier for receiving data) of its own receiver to the downstream wavelength (downstream subcarrier) corresponding to the ONU group managed by the OLT2, and the ONU waits for the command of the OLT2.

Step 6: the OLT1 detects whether the upstream data can be normally parsed. If the upstream data is not restored (does not go back to normal), then the OLT1 notifies the OLT2 of the following information: the ONU1 is a normal ONU, and the OLT1 jumps to step 1; otherwise, the OLT1 notifies the OLT2 of the following information: the ONU1 is an abnormal ONU and notifies the OLT2 of the identity information of the ONU1.

After the OLT2 receives the information sent by the OLT1 in step 4, if the ONU1 is a normal ONU, the OLT2 allows the ONU1 to enter a working state; otherwise, the OLT rejects the entrance of the ONU1 into a working state.

In the above steps, if the OLT1 still receives upstream data after the OLT1 sends an Assign_ONU_Wavelength (Assign_ONU_sub-Carrier) message to all the ONUs in the ONU group managed thereby, then the OLT1 can communicate with the network manangement system or other OLTs and obtain the information of the ONU which successfully switches from the OLT1 to other OLTs. The OLT1 compares the above information with the information of all ONUs stored therein to locate the abnormal ONU. After the OLT1 resolves the problem of the abnormal ONU, the OLT1 can notify the network manangement system or other OLTs to switch a part of ONUs back to the OLT1.

In this embodiment, the OLT1 switches the ONUs in the ONU group managed thereby to other OLTs one by one. In other embodiments, the OLT1 may also group the ONUs managed thereby, wherein each group includes one or more ONUs, the OLT switches the groups of ONUs to other OLTs one by one, and the ONUs in one group can be switched to other OLTs simultaneously. In this embodiment, the OLT1 switches all the ONUs in the ONU group(s) managed thereby to the same normally working OLT, and in other embodiments, the OLT1 may also the ONUs in the ONU group(s) managed thereby to different normally working OLTs, which can reduce the number of ONUs managed by other normally working OLTs and reduce the influence on the uplink bandwidth of the ONUs managed by other OLTs.

In order to further reducing the influence on the sending of upstream data of the entire PON system when an abnormal ONU appears at one OLT, in other embodiments, the topology structure in Fig. 5 can be adopted. As shown in Fig. 5, there is a standby OLT in the system, and the upstream wavelength for receiving upstream data and the downstream wavelength for sending downstream data of the standby OLT are different from the upstream wavelength for receiving upstream data and the downstream wavelength for sending downstream data of other OLTs. When an abnormal ONU appears in the ONUs managed by a certain OLT such as OLT1, the OLT1 can switch the ONUs managed thereby to other normally working OLTs and/or standby OLT according to the above method.

In this embodiment, after the OLT1 adjusts the upstream wavelength and the downstream wavelength (upstream and downstream subcarriers) of one ONU to those of other OLTs, the OLT1 determines the identity of the abnormal ONU according to whether the upstream data of the ONU managed thereby goes back to normal. In other embodiments, after the OLT1 adjusts the upstream wavelength and the downstream wavelength (upstream and downstream subcarriers) of one ONU to those of other OLTs, the OLT1 may also communicate with the OLT2 or the network manangement system to obtain information of whether the uplink direction at the OLT2 works normally, and if the OLT2 cannot normally parse the upstream data of a part of upstream time slots or all the upstream time slots, then the OLT1 can determine that the ONU which is commanded by the OLT1 to change the wavelength (subcarrier) is an abnormal ONU, and the OLT1 notifies the OLT2 via the network manangement system or directly notifies the OLT2 of the identity information of the abnormal ONU. After receiving the information, the OLT2 can directly process the abnormal ONU or sends an Assign_ONU_Wavelength (Assign_ONU_sub-Carrier) message shown in Table 4 to all other ONUs currently managed by the OLT2 except the abnormal ONU, and switches the ONUs back after the problem of abnormal ONU is resolved.

In this embodiment, the OLT may send wavelength (subcarrier) allocation information shown in Table 1 to the ONU via a PLOAM message and may also send the wavelength (subcarrier) allocation information to the ONU via an ONU management and control interface (OMCI) message or an extended operations, administration and maintenance (eOAM) message or other newly defined messages.

In this embodiment, the OLT does not encrypt the Assign_ONU_Wavelength (Assign_ONU_sub-Carrier) message sent to the ONU. However, in other embodiments, the OLT may encrypt the Data domain in the Assign_ONU_Wavelength (Assign_ONU_sub-Carrier) message, and the encryption key can be a key negotiated by the OLT and the ONU in advance and stored locally, or a key sent by the OLT to the ONU, or a key sent by the ONU to the OLT, or a key obtained by the OLT and the ONU according to a predefined algorithm by means of local independent calculation, or a key obtained using a standard defined method. After receiving the encrypted Assign_ONU_Wavelength (Assign_ONU_sub-Carrier) message sent by the OLT, the ONU decrypts the Data domain in the Assign_ONU_Wavelength and obtains the wavelength (subcarrier) allocated thereto by the OLT, and adjusts the emission wavelength of its own laser to the upstream wavelength (subcarrier) allocated by the OLT in the Assign_ONU_Wavelength message. The nth ONU and the OLT use the new upstream wavelength (subcarrier) to send and receive upstream data, which restores the upstream data transmission of the nth ONU. In other embodiments, the OLT may also encrypt a portion of the Assign_ONU_Wavelength (Assign_ONU_sub-Carrier) message, the portion containing the Data domain, or encrypt other contents in the Assign_ONU_Wavelength (Assign_ONU_sub-Carrier) message except the ONU-ID part, or encrypt the entire Assign_ONU_Wavelength (Assign_ONU_sub-Carrier) message.

In this embodiment, the different OLTs may be different OLTs corresponding to different PON cards, different OLTs corresponding to different PON ports of the same PON card, or different OLTs corresponding to different wavelengths of the same PON port.

In this embodiment, the subcarrier for sending data may be the same as the subcarrier for receiving data and may also be different from the subcarrier for receiving data.

In this embodiment, the upstream wavelength may be the same as the downstream wavelength and may also be different from the downstream wavelength.

The method in this embodiment may also be used for protection switching of the PON system, that is, when one OLT cannot work normally, the ONUs at this OLT can all change the working wavelengths. If the working wavelengths of all the ONUs after the change are the same, then all the ONUs establish communication with the same OLT; otherwise, the ONUs establish communication with a plurality of OLTs respectively. The other OLT(s) may be the OLT(s) in a working state in Fig. 5, and may also be the standby OLT.

It should be noted that the steps shown in the flowchart of the drawings can be executed, for example, in a computer system with a set of instructions executable by a computer, in addition, a logic order is shown in the flowchart, but the shown or described steps can be executed in a different order under some conditions.

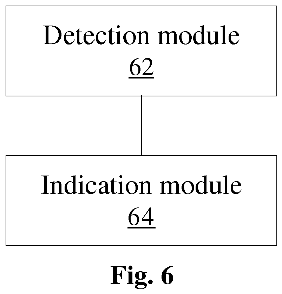

An apparatus for processing upstream data abnormity is provided in an embodiment of the present invention, which can be applied to implementing the above method for processing upstream data abnormity. Fig. 6 is a structural block diagram of an apparatus for processing upstream data abnormity according to the embodiments of the present invention, and the apparatus includes a detection module 62 and an indication module 64.

The detection module 62 is configured to detect that upstream data is abnormal; and the indication module 64 is coupled to the detection module 62 and configured to instruct one or more ONUs to stop transmitting the upstream data and/or instruct one or more ONUs to change a physical channel.

It should be noted that the apparatus for processing upstream data abnormity described in the apparatus embodiments corresponds to the method embodiments, with the specific implementation described in the method embodiment in detail, thereby needing no further description.

In summary, according to the embodiments of the present invention, a method and apparatus for processing upstream data abnormity are provided. By means of stopping ONUs from transmitting upstream data and/or changing the physical channels of ONUs, the embodiments of the present invention solve the problem of the upstream data abnormity of ONUs in the related art, thereby can avoid the impact on normal service transmission of ONUs, and ensure the quality of the network service.

Obviously, those skilled in the art shall understand that the above-mentioned modules and steps of the present invention can be realized by using general purpose calculating device, can be integrated in one calculating device or distributed on a network which consists of a plurality of calculating devices. Alternatively, the modules and the steps of the present invention can be realized by using the executable program code of the calculating device. Consequently, they can be stored in the storing device and executed by the calculating device, or they are made into integrated circuit module respectively, or a plurality of modules or steps thereof are made into one integrated circuit module. In this way, the present invention is not restricted to any particular hardware and software combination.

The descriptions above are only the preferable embodiment of the present invention, which are not used to restrict the present invention, for those skilled in the art, the present invention may have various changes and variations. Any amendments, equivalent substitutions, improvements, etc. within the principle of the present invention are all included in the scope of the protection as defined by the claims of the present invention.

## Claims

1. A method for processing upstream data abnormity, comprising:
an optical line terminal, OLT, detecting that upstream data is abnormal (S302); and **characterized by**
the OLT instructing one or more optical network units, ONUs, to change a physical channel (S304);
the OLT determining an abnormal ONU in the one or more ONUs which causes the upstream data to be abnormal according to whether the upstream data is back to normal.

2. The method according to claim 1, **characterized in that** the OLT detects that upstream data is abnormal in a situation that: in a case where the OLT has allocated a first physical channel for a first ONU, the OLT receives, in the first physical channel, upstream data not sent by the first ONU.

3. The method according to claim 1, **characterized in that** the OLT detects that upstream data is abnormal in a situation that: in a case where the OLT has allocated a first physical channel for a first ONU, the OLT is not able to parse all the upstream data sent by the first ONU.

4. The method according to claim 1, **characterized in that** the OLT detects that upstream data is abnormal in a situation that: in a case where the OLT has allocated a first physical channel for a first ONU, the OLT is not able to parse all the upstream data sent by the first ONU, and still receives upstream data in the first physical channel after having instructed the first ONU to stop transmitting the upstream data.

5. The method according to claim 1, **characterized in that** the OLT detects that upstream data is abnormal (S302) in a situation that: in a case where the OLT has allocated a first physical channel for a first ONU, the OLT is not able to parse all the upstream data sent by the first ONU and an optical power value of the upstream data received by the OLT in the first physical channel increases or the optical power value of the upstream data received by the OLT in the first physical channel changes suddenly.

6. The method according to claim 1, **characterized in that** the OLT detects that upstream data is abnormal (S302) in a situation that: in a case where the OLT has allocated a first physical channel for a first ONU and allocated a second physical channel for a second ONU, the OLT does not receive the upstream data from the first ONU and the OLT is not able to parse all the upstream data sent by the second ONU.

7. The method according to claim 1, **characterized in that** the OLT detects that upstream data is abnormal in a situation that: in a case where the OLT has allocated a first physical channel for a first ONU, the OLT does not receive the upstream data from the first ONU in the first physical channel and the OLT receives upstream data in an unallocated second physical channel.

8. The method according to claim 1, **characterized in that** the OLT detects that upstream data is abnormal (S302) in a situation that: in a case where the OLT has allocated a first physical channel for a first ONU, the OLT detects that a shift exists in the first physical channel of the first ONU.

9. The method according to any one of claims 1 to 8, **characterized in that** before the OLT instructs the one or more ONUs to change a physical channel, the method further comprises:
the OLT obtaining information of another OLT or other OLTs for accommodating the one or more ONUs; and
the OLT switching the one or more ONUs to said another OLT or said other OLTs according to the information.

10. The method according to claim 9, **characterized in that** the OLT switching the one or more ONUs to said another OLT or said other OLTs according to the information comprises: in a case where the information contains a downstream wavelength value for sending downstream data and an upstream wavelength value for receiving upstream data of said another OLT or said other OLTs, the OLT commanding the one or more ONUs to adjust one or more downstream wavelengths of the one or more ONUs to the downstream wavelength value and commanding the one or more ONUs to adjust one or more upstream wavelength of the one or more ONUs to the upstream wavelength value.

11. The method according to claim 9, **characterized in that** after the OLT instructs the one or more ONUs to change a physical channel, the method further comprises:
the OLT detecting that upstream data is normal; and
the OLT notifying said another OLT or said other OLTs to switch the one or more ONUs back to the OLT.

12. The method according to claim 1, **characterized in that** after determining an abnormal ONU in the one or more ONUs which causes the upstream data to be abnormal, the method further comprises:
recording the abnormal ONU; and
blocking the abnormal ONU from entering a working state.

13. The method according to any one of claims 1 to 8, **characterized in that** the OLT instructing one or more ONUs to stop transmitting the upstream data and/or instructing one or more ONUs to change a physical channel (S304) comprises: the OLT sending an indication of changing the physical channel by carrying the indication in a management channel.

14. The method according to any one of claims 1 to 8, **characterized in that** the OLT instructing one or more ONUs to change a physical channel (S304) comprises:
the OLT completely or partially encrypts the indication of changing the physical channel.

15. The method according to any one of claims 1 to 8, **characterized in that** the physical channel comprises one of following: wavelength, subcarrier, subcarrier group and time slot.

16. An apparatus for processing upstream data abnormity, applied to an optical line terminal, OLT, **characterized by** comprising:
a detection module (62), configured to detect that upstream data is abnormal; and
an indication module (64), configured to instruct one or more optical network units , ONUs, to change a physical channel;
wherein the apparatus is further configured to determine an abnormal ONU in the one or more ONUs which causes the upstream data to be abnormal according to whether the upstream data is back to normal.

## Patentansprüche

1. Verfahren zum Verarbeiten von Upstream-Datenanomalien, umfassend:
ein optisches Leitungsendgerät, OLT, das erkennt, dass Upstream-Daten abnormal sind (S302); und **dadurch gekennzeichnet, dass**
das OLT eine oder mehrere optische Netzwerkeinheiten, ONUs, anweist, einen physischen Kanal zu ändern (S304);
das OLT eine abnormale ONU in der einen oder den mehreren ONUs ermittelt, die dazu führt bzw. führen, dass die Upstream-Daten abnormal sind, je nachdem, ob die Upstream-Daten wieder normal sind.

2. Verfahren nach Anspruch 1, **dadurch gekennzeichnet, dass** das OLT erkennt, dass Upstream-Daten in einer Situation abnormal sind, in der in einem Fall, bei dem das OLT einen ersten physischen Kanal für eine erste ONU zugewiesen hat, das OLT auf dem ersten physischen Kanal Upstream-Daten empfängt, die nicht durch die erste ONU gesendet wurden.

3. Verfahren nach Anspruch 1, **dadurch gekennzeichnet, dass** das OLT erkennt, dass Upstream-Daten in einer Situation abnormal sind, in der in einem Fall, bei dem das OLT einen ersten physischen Kanal für eine erste ONU zugewiesen hat, das OLT nicht in der Lage ist, alle Upstream-Daten zu analysieren, die durch die erste ONU gesendet wurden.

4. Verfahren nach Anspruch 1, **dadurch gekennzeichnet, dass** das OLT erkennt, dass Upstream-Daten in einer Situation abnormal sind, in der in einem Fall, bei dem das OLT einen ersten physischen Kanal für eine erste ONU zugewiesen hat, das OLT nicht in der Lage ist, alle Upstream-Daten zu analysieren, die durch die erste ONU gesendet wurden, und noch immer Upstream-Daten auf dem ersten physischen Kanal empfängt, nachdem es die erste ONU angewiesen hat, das Senden von Upstream-Daten zu beenden.

5. Verfahren nach Anspruch 1, **dadurch gekennzeichnet, dass** das OLT erkennt, dass Upstream-Daten in einer Situation abnormal sind (S302), in der in einem Fall, bei dem das OLT einen ersten physischen Kanal für eine erste ONU zugewiesen hat, das OLT nicht in der Lage ist, alle Upstream-Daten zu analysieren, die durch die erste ONU gesendet wurden, und ein Wert der optischen Leistung der durch das OLT auf dem ersten physischen Kanal empfangenen Upstream-Daten ansteigt oder sich der Wert der optischen Leistung der durch das OLT auf dem ersten physischen Kanal empfangenen Upstream-Daten plötzlich ändert.

6. Verfahren nach Anspruch 1, **dadurch gekennzeichnet, dass** das OLT erkennt, dass Upstream-Daten in einer Situation abnormal sind (S302), in der in einem Fall, bei dem das OLT einen ersten physischen Kanal für eine erste ONU zugewiesen hat und einen zweiten physischen Kanal für eine zweite ONU zugewiesen hat, das OLT die Upstream-Daten nicht von der ersten ONU empfängt und das OLT nicht in der Lage ist, alle durch die zweite ONU gesendeten Upstream-Daten zu analysieren.

7. Verfahren nach Anspruch 1, **dadurch gekennzeichnet, dass** das OLT erkennt, dass Upstream-Daten in einer Situation abnormal sind, in der in einem Fall, bei dem das OLT einen ersten physischen Kanal für eine erste ONU zugewiesen hat, das OLT die Upstream-Daten von der ersten ONU nicht auf dem ersten physischen Kanal empfängt und das OLT Upstream-Daten auf einem nicht zugewiesenen zweiten physischen Kanal empfängt.

8. Verfahren nach Anspruch 1, **dadurch gekennzeichnet, dass** das OLT erkennt, dass Upstream-Daten in einer Situation abnormal sind (S302), in der in einem Fall, bei dem das OLT einen ersten physischen Kanal für eine erste ONU zugewiesen hat, das OLT erkennt, dass auf dem ersten physischen Kanal der ersten ONU eine Verschiebung vorliegt.

9. Verfahren nach einem der Ansprüche 1 bis 8, **dadurch gekennzeichnet, dass** das Verfahren ferner umfasst, bevor das OLT die eine oder die mehreren ONUs anweist, einen physischen Kanal zu ändern:
durch das OLT, Erhalten von Informationen von einem anderen OLT oder anderen OLTs zum Aufnehmen der einen oder mehreren ONUs; und
durch das OLT, Umschalten der einen oder mehreren ONUs auf das andere OLT oder die anderen OLTs gemäß den Informationen.

10. Verfahren nach Anspruch 9, **dadurch gekennzeichnet, dass** das Umschalten der einen mehreren ONUs auf das andere OLT oder die anderen OLTs gemäß den Informationen durch das OLT umfasst: in einem Fall, bei dem die Informationen einen Downstream-Wellenlängenwert zum Senden von Downstream-Daten und einen Upstream-Wellenlängenwert zum Empfangen von Upstream-Daten des anderen OLT oder der anderen OLTs enthalten, das OLT die eine oder die mehreren ONUs anweist, eine oder mehrere Downstream-Wellenlängen der einen oder der mehreren ONUs an den Downstream-Wellenlängenwert anzupassen, und die eine oder die mehreren ONUs anweist, einen oder mehrere Upstream-Wellenlängen der einen oder mehreren ONUs an den Upstream-Wellenlängenwert anzupassen.

11. Verfahren nach Anspruch 9, **dadurch gekennzeichnet, dass** das Verfahren, nachdem das OLT die eine oder die mehreren ONUs angewiesen hat, einen physischen Kanal zu ändern, ferner umfasst:
durch das OLT, Erkennen, dass Upstream-Daten normal sind. und
durch das OLT, Benachrichtigen des anderen OLT oder der anderen OLTs, die eine oder die mehreren ONUs wieder auf das OLT umzuschalten.

12. Verfahren nach Anspruch 1, **dadurch gekennzeichnet, dass** das Verfahren nach dem Ermitteln einer abnormalen ONU in der einen oder den mehreren ONUs, die bewirkt bzw. bewirken, dass die Upstream-Daten abnormal sind, ferner umfasst:
Aufzeichnen der abnormalen ONU; und
Verhindern, dass die abnormale ONU in einen Arbeitszustand übergeht.

13. Verfahren nach einem der Ansprüche 1 bis 8, **dadurch gekennzeichnet, dass** das Anweisen einer oder mehrerer ONUs durch das OLT, das Übertragen der Upstream-Daten zu beenden, und/oder das Anweisen einer oder mehrerer ONUs, einen physischen Kanal zu ändern (S304), umfasst: durch das OLT, Senden eines Hinweises zum Wechseln des physischen Kanals durch Transportieren des Hinweises auf einem Verwaltungskanal.

14. Verfahren nach einem der Ansprüche 1 bis 8, **dadurch gekennzeichnet, dass** das Anweisen einer oder mehrerer ONUs, einen physischen Kanal zu ändern (S304), umfasst: durch das OLT, vollständiges oder anteiliges Verschlüsseln des Hinweises zum Ändern des physischen Kanals.

15. Verfahren nach einem der Ansprüche 1 bis 8, **dadurch gekennzeichnet, dass** der physische Kanal eines aus Folgendem umfasst: Wellenlänge, Hilfsträger, Hilfsträgergruppe und Zeitfenster.

16. Vorrichtung zum Verarbeiten einer Upstream-Datenanomalie, angewendet auf ein optisches Leitungsendgerät (OLT), **dadurch gekennzeichnet, dass** sie umfasst:
ein Erkennungsmodul (62), das eingerichtet ist, um zu erkennen, dass Upstream-Daten abnormal sind; und
ein Hinweismodul (64), das eingerichtet ist, um eine oder mehrere optische Netzwerkeinheiten (ONUs) anzuweisen, einen physischen Kanal zu ändern;
wobei die Vorrichtung ferner eingerichtet ist, um eine abnormale ONU in der einen oder den mehreren ONUs zu ermitteln, die dazu führt bzw. führen, dass die Upstream-Daten abnormal sind, je nachdem, ob die Upstream-Daten wieder normal sind.

## Revendications

1. Procédé de traitement d'une anomalie de données en amont, comprenant :
un terminal de ligne optique, OLT, détectant que des données en amont sont anormales (S302) ; et **caractérisé en ce que**
l'OLT ordonne à au moins une unité de réseau optique, ONU, de changer de canal physique (S304) ;
l'OLT détermine une ONU anormale dans l'au moins une ONU qui provoque l'anomalie des données en amont selon que les données en amont sont ou non redevenues normales.

2. Procédé selon la revendication 1, **caractérisé en ce que** l'OLT détecte que les données en amont sont anormales dans une situation où : dans le cas où l'OLT a attribué un premier canal physique à une première ONU, l'OLT reçoit, dans le premier canal physique, des données en amont non envoyées par la première ONU.

3. Procédé selon la revendication 1, **caractérisé en ce que** l'OLT détecte que les données en amont sont anormales dans une situation où : dans le cas où l'OLT a attribué un premier canal physique à une première ONU, l'OLT n'est pas en mesure d'analyser toutes les données en amont envoyées par la première ONU.

4. Procédé selon la revendication 1, **caractérisé en ce que** l'OLT détecte que les données en amont sont anormales dans une situation où : dans le cas où l'OLT a attribué un premier canal physique à une première ONU, l'OLT n'est pas en mesure d'analyser toutes les données en amont envoyées par la première ONU et reçoit toujours des données en amont dans le premier canal physique après avoir demandé à la première ONU de cesser de transmettre les données en amont.

5. Procédé selon la revendication 1, **caractérisé en ce que** l'OLT détecte que les données en amont sont anormales (S302) dans une situation où : dans le cas où l'OLT a attribué un premier canal physique à une première ONU, l'OLT n'est pas en mesure d'analyser toutes les données en amont envoyées par la première ONU et une valeur de puissance optique des données en amont reçues par l'OLT dans le premier canal physique augmente ou la valeur de puissance optique des données en amont reçues par l'OLT dans le premier canal physique change soudainement.

6. Procédé selon la revendication 1, **caractérisé en ce que** l'OLT détecte que les données en amont sont anormales (S302) dans une situation où : dans le cas où l'OLT a attribué un premier canal physique à une première ONU et attribué un second canal physique à une seconde ONU, l'OLT ne reçoit pas les données en amont de la première ONU et n'est pas en mesure d'analyser toutes les données en amont envoyées par la seconde ONU.

7. Procédé selon la revendication 1, **caractérisé en ce que** l'OLT détecte que des données en amont sont anormales dans une situation où : dans le cas où l'OLT a attribué un premier canal physique à une première ONU, l'OLT ne reçoit pas les données en amont de la première ONU dans le premier canal physique et l'OLT reçoit des données en amont dans un second canal physique non attribué.

8. Procédé selon la revendication 1, **caractérisé en ce que** l'OLT détecte que les données en amont sont anormales (S302) dans une situation où : dans le cas où l'OLT a attribué un premier canal physique à une première ONU, l'OLT détecte l'existence d'un décalage dans le premier canal physique de la première ONU.

9. Procédé selon l'une quelconque des revendications 1 à 8, **caractérisé en ce que**, avant que l'OLT n'ordonne à l'au moins une ONU de changer de canal physique, le procédé comprend en outre les étapes suivantes :
l'OLT obtient des informations d'un autre OLT ou d'autres OLT pour accueillir l'au moins une ONU ; et
l'OLT commute l'au moins une ONU vers ledit autre OLT ou vers lesdits autres OLT, en fonction des informations.

10. Procédé selon la revendication 9, **caractérisé en ce que** l'OLT commutant l'au moins une ONU vers ledit autre OLT ou vers lesdits autres OLT selon les informations comprend : dans le cas où les informations contiennent une valeur de longueur d'onde en aval pour l'envoi de données en aval et une valeur de longueur d'onde en amont pour recevoir des données en amont dudit autre OLT ou desdits autres OLT, l'OLT commandant à l'au moins une ONU de régler au moins une longueur d'onde en aval de l'au moins une ONU à la valeur de longueur d'onde en aval et commandant à l'au moins une ONU de régler au moins une longueur d'onde en amont d'au moins une ONU à la valeur de longueur d'onde en amont.

11. Procédé selon la revendication 9, **caractérisé en ce que**, après que l'OLT a ordonné à l'au moins une ONU de changer de canal physique, le procédé comprend en outre :
l'OLT détecte que ces données en amont sont normales ; et
l'OLT notifie audit autre OLT ou auxdits autres OLT de recommuter l'au moins une unité ONU vers l'OLT.

12. Procédé selon la revendication 1, **caractérisé en ce que**, après la détermination d'une unité ONU anormale dans l'au moins une ONU qui entraîne l'anomalie des données en amont, le procédé comprend en outre les étapes consistant à :
enregistrer l'ONU anormale ; et
empêcher l'ONU anormale de passer à un état de fonctionnement.

13. Procédé selon l'une quelconque des revendications 1 à 8, **caractérisé en ce que** l'OLT ordonnant à au moins une ONU de cesser de transmettre les données en amont et/ou ordonnant à au moins une ONU de changer un canal physique (S304), comprend : l'envoi par l'OLT d'une indication de changement du canal physique par transport de l'indication dans un canal de gestion.

14. Procédé selon l'une quelconque des revendications 1 à 8, **caractérisé en ce que** l'OLT ordonnant à au moins une unité ONU de modifier un canal physique (S304) comprend : l'OLT crypte complètement ou partiellement l'indication de changement de canal physique.

15. Procédé selon l'une quelconque des revendications 1 à 8, **caractérisé en ce que** le canal physique comprend l'un des éléments suivants : longueur d'onde, sous-porteuse, groupe de sous-porteuses et intervalle de temps.

16. Appareil de traitement d'anomalie de données en amont appliqué à un terminal de ligne optique, OLT, **caractérisé en ce qu'**il comprend :
un module de détection (62), configuré pour détecter que les données en amont sont anormales ; et
un module d'indication (64), configuré pour ordonner à au moins une unité de réseau optique, ONU, de changer de canal physique ;
l'appareil étant en outre configuré pour déterminer une ONU anormale dans l'au moins une ONU qui provoque l'anomalie des données en amont selon que les données en amont sont ou non redevenues normales.
